# EUROPEAN PATENT APPLICATION

(11) **EP 1 921 554 A1**
(43) Date of publication of application: **14.05.2008**
(21) Application number: 05781556.5
(22) Date of filing: 01.09.2005
(51) Int. Cl.: G06F 21/00, G06F 21/24

(54) **DATA DELIVERY SYSTEM, ISSUANCE APPARATUS, TERMINAL APPARATUS AND INTERMEDIATE NODE**

(71) Applicant: MITSUBISHI ELECTRIC CORPORATION, Chiyoda-ku Tokyo 100-8310 (JP)
(72) Inventor: TSURUKAWA, Tatsuya, Tokyo 100-8310 (JP)
(74) Representative: Pfenning, Meinig & Partner GbR
(86) International application number: PCT/JP2005/016008
(87) International publication number: WO 2007/029285

(57) **Abstract**

A license delivery system 1000 allows intermediate nodes to modify a license within a range allowed by a license issuer. According to the license delivery system 1000, each of the intermediate nodes involved in the license delivery can verify if the license modifications have been correctly done by the intermediate nodes. Also according to the license delivery system 1000, a license issuer apparatus 2 adds, to an original license, original allowed modification information which defines a modifiable range of the original license. The intermediate nodes sequentially append, to a license 1 issued by the license issuer apparatus, the respective modified licenses that are modified within the modifiable range defined by the original allowed modification information.

## Description

### Technical Field

The present invention relates to a management system of a right to use of digital contents. For example, the invention relates to license delivery technique with multiple stages or multiple layers, which allows an intermediate node to modify a license within the range allowed by an issuer of the license.

### Background Art

A management system of a right to use contents has been proposed, in which use of digital contents such as video, music, document, image, etc. is limited by a license. For example, as for a license specifying a period to use contents from January 1, 2005 through December 31, 2005, a user who obtains the license can use the contents only during the period specified in the license.

Similarly, if a license specifies the number of visible-audible times of contents as up to 10 times, a user who obtains the license can use the contents within the range of the number of times specified in the license.

The license is what provided to a user by a contents holder who is an owner of copyright of contents corresponding to the license. The contents holder often entrusts a contents provider to deliver the contents. This is because of, for example, the following reason. If the contents holder provides the license to many users by exchanging with billing, etc., it is complicated to manage all the respective users and carry out billing process, etc. Therefore, it is more efficient for business to entrust the contents provider rather than to deliver by the contents holder itself.

Here, in many cases, the contents itself of the license is managed not by the contents holder but by the contents provider. For example, the following form may be taken. The contents holder does not manage modification/issuance of the license according to the billing, etc. for each user. Instead, the contents holder provides the license which becomes a template to the contents provider. The contents provider carries out detailed management of the modification/issuance of the license within the range of the model license provided.

However, the relationship between the contents holder and the contents provider is mainly prescribed by a contract, etc. Further, it is not specifically systemized, and there is a problem that, due to human error or intentional fraud of the contents provider, the contents provider may modify/issue the license exceeding the range of the license allowed by the contents holder. Furthermore, there is a problem that it is difficult to detect even if such license that exceeds the allowed range is issued.

For such a problem, JP2004-355100 gazette discloses technique to share a license server by a distributor (the contents holder) and a user (the user) and verify that the license sent to the user from the distributor through a retailer (the contents provider) is correct.

Furthermore, JP2003-87235 gazette discloses technique to share a global common key by a system holder (the contents holder) and a user apparatus (the user) beforehand and prevent a service provider (the contents provider) from modifying a contents key.

However, all of these rely on the assumption that the contents holder manages all the users. Therefore, although it is effective to prevent fraudulent license modification of the contents provider, another problem that the contents holder needs to manage the users becomes evident.
Patent Document 1: JP2004-355100
Patent Document 2: JP2003-87235

### Disclosure of the Invention

### Problems to be Solved by the Invention

The present invention aims to provide a license delivery system which entrusts the contents provider to manage respective users, and as well prevents fraudulent license modification by the contents provider and allows correct license modification.

### Means to Solve the Problems

According to the present invention, in a data delivery system having an issuance apparatus to issue data, a plurality of intermediate nodes to relay the data issued by the issuance apparatus, and a terminal apparatus to receive the data through the plurality of intermediate nodes,
the issuance apparatus issues relay data including original data to be delivered to the terminal apparatus and original allowed modification information allowing to change the original data and showing contents which is allowed to change as well,
at least one of the plurality of intermediate nodes, on relaying the relay data issued by the issuance apparatus, generates modified data which is made by changing at least a part of the original data based on the original allowed modification information included in the relay data, adds the modified data generated to the relay data, and relays the relay data, and
the terminal apparatus receives the relay data to which the modified data is added by the at least one of the plurality of intermediate nodes.

The original data included in the relay data issued by the issuance apparatus includes an original license which allows the terminal apparatus a predetermined right.

According to the present invention, an issuance apparatus issuing predetermined data and delivering the predetermined data issued to a terminal apparatus through a plurality of intermediate nodes, the issuance apparatus includes:
an issuing unit issuing relay data including original data to be delivered to the terminal apparatus and original allowed modification information allowing at least one of the plurality of intermediate nodes to change the original data and showing contents which is allowed to change as well; and
an issuer-side sending unit sending the relay data issued by the issuing unit.

According to the present invention, an intermediate node relaying data to a terminal apparatus includes:
a node-side receiving unit receiving relay data, including original data to be delivered to the terminal apparatus and original allowed modification information allowing to change the original data and showing contents which is allowed to change as well, as a target for relaying;
an adding unit generating modified data which is made by changing at least a part of the original data based on the original allowed modification information included in the relay data received by the node-side receiving unit, and adding the modified data generated to the relay data received by the node-side receiving unit; and
a node-side sending unit sending the relay data to which the modified data is added by the adding unit as new relay data for relaying.

The adding unit obtains a difference showing a change from the original data as self difference information and generates the modified data based on the self difference information obtained and the original allowed modification information included in the relay data received by the node-side receiving unit.

The adding unit includes a difference verifying unit verifying if the self difference information is within a range allowed by the original allowed modification information or not.

The node-side receiving unit receives relay data, including original data to be delivered to the terminal apparatus, original allowed modification information allowing to change the original data and showing contents which is allowed to change as well, and other node changed data which is made by changing the original data and added by another intermediate node, as a target for relaying, and
the adding unit includes a node-side relay data verifying unit verifying if the relay data received by the node-side receiving unit is correct or not based on the original data, the original allowed modification information, and the other node changed data included in the relay data received by the node-side receiving unit.

According to the present invention, a terminal apparatus receiving delivery of data relayed through a plurality of intermediate nodes, the terminal apparatus includes:
a terminal-side receiving unit receiving relay data relayed through the plurality of intermediate nodes and including original data to be delivered, original allowed modification information allowing at least one of the plurality of intermediate nodes to change the original data and showing contents which is allowed to change as well, and other node changed data which is made by changing the original data and added by at least one of the plurality of intermediate nodes; and
a terminal-side relay data verifying unit verifying if the relay data received by the terminal-side receiving unit is correct or not based on the original data, the original allowed modification information, and the other node changed data included in the relay data received by the terminal-side receiving unit.

According to the present invention, in a data delivery system having an issuance apparatus to issue data, a plurality of intermediate nodes to relay the data issued by the issuance apparatus, and a terminal apparatus to receive the data through the plurality of intermediate nodes,
the issuance apparatus issues relay data including original data to be delivered to the terminal apparatus,
at least one of the plurality of intermediate nodes, on relaying the relay data issued by the issuance apparatus, obtains a difference showing a change from the original data as self difference information, adds the self difference information obtained to the relay data, and relays the relay data, and
the terminal apparatus receives the relay data to which the self difference information is added by at least the one of the plurality of intermediate nodes.

According to the present invention, an intermediate node relaying data to a terminal apparatus includes:
a node-side receiving unit receiving relay data including original data to be delivered to the terminal apparatus as a target for relaying;
an adding unit obtaining a difference from the original data as self difference information and adding the self difference information to the relay data received by the node-side receiving unit; and
a node-side sending unit sending the relay data, to which the self difference information is added by the adding unit, as new relay data for relaying.

The intermediate node-side receiving unit receives relay data, including original data to be delivered to the terminal apparatus and original allowed modification information allowing to change the original data and showing contents which is allowed to change as well, as a target for relaying, and
the adding unit includes a difference verifying unit verifying if the self difference information is within a range allowed by the original allowed modification information included in the relay data received by the node-side receiving unit or not.

The node-side receiving unit receives relay data, including original data to be delivered to the terminal apparatus, original allowed modification information allowing to change the original data and showing contents which is allowed to change as well, and other node difference information to which a change from the original data is added by another intermediate node as a difference, as a target for relaying, and
the adding unit includes a node-side relay data verifying unit verifying if the relay data received by the node-side receiving unit is correct or not based on the original allowed modification information and the other node difference information included in the relay data received by the node-side receiving unit.

The node-side receiving unit receives relay data, including original data to be delivered to the terminal apparatus and other node difference information to which a change from the original data is added by another intermediate node as a difference, as a target for relaying, and
the adding unit includes a node-side reflected data generating unit generating reflected data to which the difference from the original data shown by the other node difference information is reflected to the original data based on the original data and the other node difference information included in the relay data received by the node-side receiving unit.

According to the present invention, a terminal apparatus receiving delivery of data relayed through a plurality of intermediate nodes, the terminal apparatus includes:
a terminal-side receiving unit receiving relay data relayed through the plurality of intermediate nodes and including original data to be delivered, original allowed modification information allowing at least one of the plurality of intermediate nodes to change the original data and showing contents which is allowed to change as well, and other node difference information to which a change from the original data is added by at least one of the plurality of intermediate nodes as a difference; and
a terminal-side relay data verifying unit verifying if the relay data received by the terminal-side receiving unit is correct or not based on the original allowed modification information and the other node difference information included in the relay data received by the terminal-side receiving unit.

The terminal-side reflected data generating unit generating reflected data to which the difference from the original data shown by the other node difference information is reflected to the original data based on the original data and the other node difference information included in the relay data received by the terminal-side receiving unit.

According to the invention, an intermediate node relaying data to a terminal apparatus, the intermediate node includes:
a node-side receiving unit receiving relay data including original data to be delivered to the terminal apparatus as a target for relaying;
an adding unit obtaining information allowing to change the original data included in the relay data received by the node-side receiving unit and showing contents which is allowed to change as self allowed modification information, and adding the self allowed modification information obtained to the relay data received by the node-side receiving unit; and
a node-side sending unit sending the relay data to which the self allowed modification information is added by the adding unit as new relay data for relaying.

The node-side receiving unit receives relay data including original data to be delivered to the terminal apparatus and other node allowed modification information which is information added by another intermediate node and which allows to change the original data and shows contents which is allowed to change as well, and
the adding unit includes an allowed information self-verifying unit verifying if the self allowed modification information is correct or not based on the other node allowed modification information included in the relay data received by the node-side receiving unit.

The node-side receiving unit receives relay data including original data and original allowed information issued by an issuance apparatus which issues the original data to be delivered to the terminal apparatus and the original allowed modification information allowing to change the original data and showing contents which is allowed to change as well, and other node allowed modification information which is information added by another intermediate node and which allows to change the original data and shows contents which is allowed to change as well, and
the adding unit includes a node-side relay data verifying unit verifying if the relay data received by the node-side receiving unit is correct or not based on the original allowed modification information and the other node allowed modification information included in the relay data received by the node-side receiving unit.

### Effect of the Invention

The present invention enables to provide a license delivery system which can entrust a contents provider to manage respective users, and can prevent fraudulent license modification by the contents provider and allows correct license modification.

### Best Modes for Carrying out the Invention

### Embodiment 1.

### (1. Appending of modified license and a processing system possessed by each node)

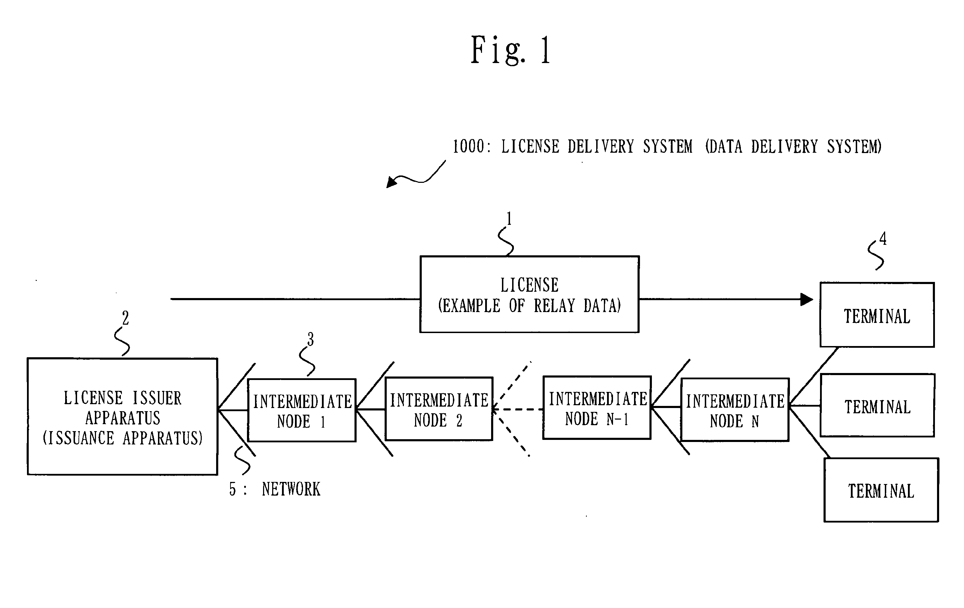

The first embodiment will be explained by referring to Figs. 1 through 30.

First, using Fig. 1, a license delivery system 1000 of the first embodiment will be explained. Fig. 1 is a diagram showing a system configuration of the license delivery system 1000 according to the first embodiment. The license delivery system 1000 includes a license issuer apparatus 2 (an example of an issuance apparatus) which issues a license 1 (an example of relay data), an intermediate node 3 (N nodes of 1 through N) which relays the license 1 and adds a modified license (an example of modified data), which will be discussed later, to the license 1, and a plurality of terminal apparatuses 4 which receives the license 1 finally. Further, the license issuer apparatus 2, the intermediate node 3, and the terminal 4 are connected to a network 5. The network 5 can be wired or wireless. Here, if it is necessary to distinguish each of 1 through N, the intermediate node 3 will be represented as an intermediate node (1), an intermediate node (N), etc. Further, the terminal apparatus 4 may be simply referred to as a terminal in the following.

(1) The license 1 is a right to use contents generated by a license issuer. The license 1 includes use right information related to a right to use such as a visible-audible time period or the number of visible-audible times of video contents, etc. Here, in the following, when the intermediate node 3 sends the license 1, the license 1 is sometimes called as a latest license. Further, when the intermediate node 3 or the terminal 4 receives the license 1, the license 1 is sometimes called as a received license.
(2) The license issuer apparatus 2 is an apparatus to generate the above license 1. Normally, the license issuer apparatus 2 is possessed by a license issuer.
(3) The terminal 4 is an apparatus to obtain contents beforehand, and looks and listens the contents based on the license 1 received. Normally, the terminal 4 is possessed by the user.
(4) The intermediate node 3 receives the license 1 from the license issuer apparatus 2 or a preceding intermediate node 3, adds proper modification to the license 1 received, or without modification, and delivers (relays) the license 1 to a succeeding intermediate node 3 or the terminal 4. Normally, the intermediate node 3 is possessed by a dealer such as a contents provider, etc.
(5) The license 1 is passed through a plurality of intermediate nodes before reaching the terminal 4 which uses the contents. In this case, each intermediate node 3 may modify contents of the license 1.

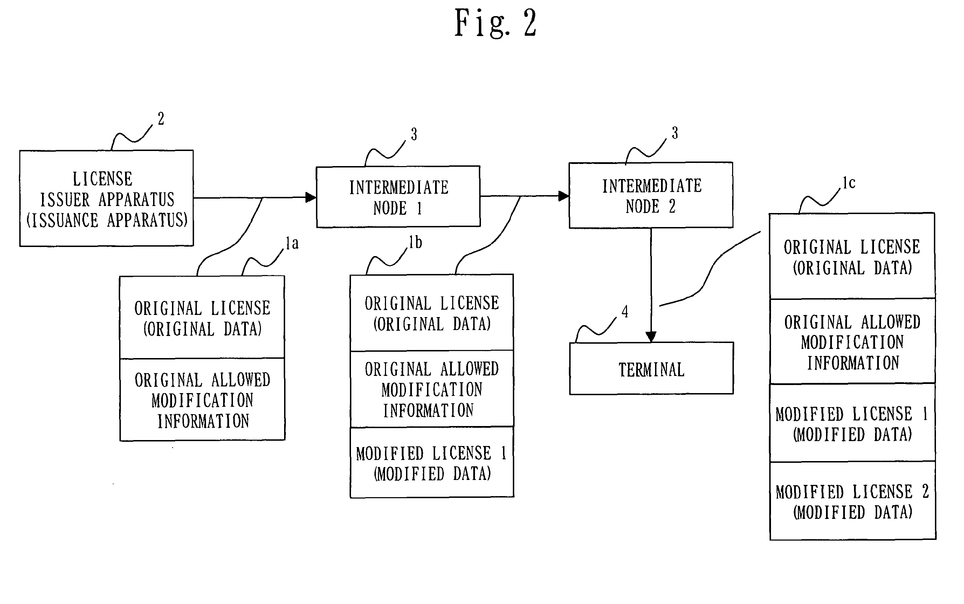

Fig. 2 shows an outline of the operation of the license delivery system 1000. Fig. 2 shows a case in which a license is delivered to the terminal 4 through an intermediate node (1) and an intermediate node (2). The intermediate node (1) and the intermediate node (2) modify the contents of the license 1. First, the license issuer apparatus 2 issues a license 1a including an original license (an example of original data) and original allowed modification information, and sends to the intermediate node
(1). The intermediate node (1) adds the modified license 1 to the received license 1a to generate a license 1b, and sends the license 1b to the intermediate node (2). The intermediate node (2) adds the modified license 2 to the received license 1b to generate a license 1c, and sends the license 1c to the terminal 4. The terminal 4 receives the license 1c sent by the intermediate node (2). More detailed operation will be explained later.

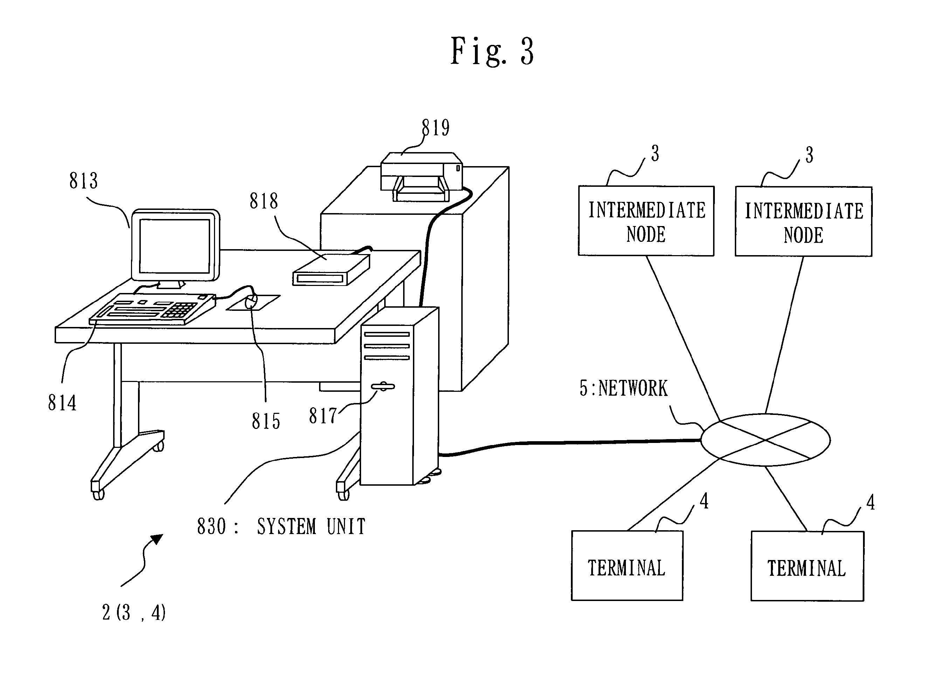

Fig. 3 shows an outer appearance of the license issuer apparatus 2 according to the first embodiment. The license issuer apparatus 2 of Fig. 3 is a computer system. Further, not shown in the figure, the intermediate node 3 and the terminal 4 are also computer systems, which have a similar outer appearance to the license issuer apparatus 2 of Fig. 3.

In Fig. 3, the license issuer apparatus 2 includes a system unit 830, a liquid crystal display apparatus 813, a keyboard 814, a mouse 815, a compact disk drive (CDD) 818, and a printer 819, which are connected with a cable. Further, the license issuer apparatus 2 is connected to a network 5. And the license issuer apparatus 2 is able to communicate with the intermediate node 3, the terminal 4, etc. through the network 5.

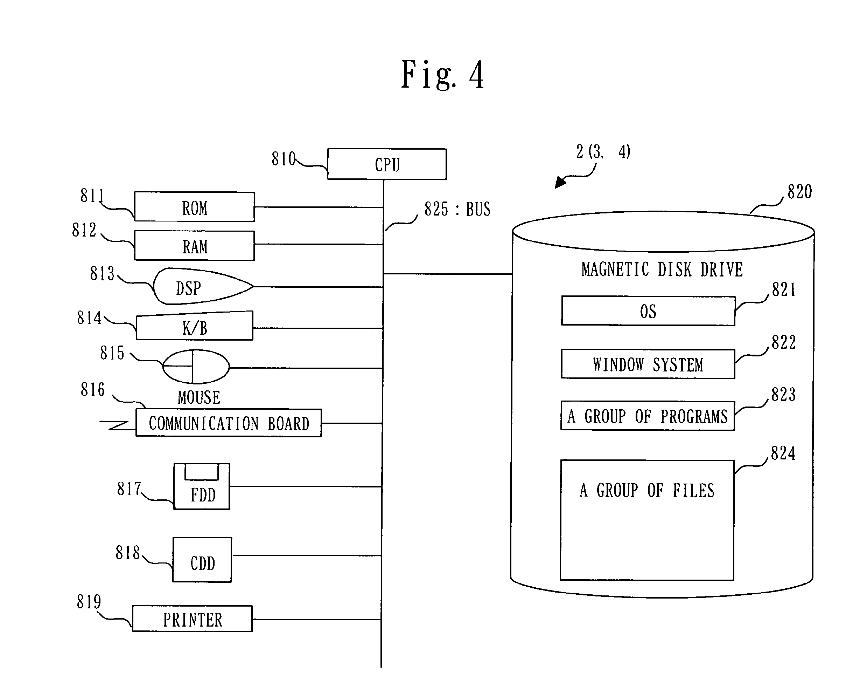

Fig. 4 is a hardware configuration of the license issuer apparatus 2. Here, hardware configurations of the intermediate node 3 and the terminal 4 are similar to the hardware configuration of the license issuer apparatus 2 of Fig. 4. In Fig. 4, the license issuer apparatus 2 includes a CPU (Central Processing Unit) 810 which executes programs. The CPU 810 is connected to a ROM 811, a RAM 812, a liquid crystal display apparatus 813, a keyboard 814, a mouse 815, a communication board 816, an FDD (Flexible Disk Drive) 817, a CDD 818, a printer 819, a magnetic disk drive 820, etc. via a bus 825. The communication board 816 is connected to the network 5.

The magnetic disk drive 820 stores an operating system (OS) 821, a window system 822, a group of programs 823, and a group of files 824. The group of programs 823 is executed by the CPU 810, the OS 821, and the window system 822.

The above group of programs 823 stores programs which execute functions that will be explained as "-- unit" in the explanation of the following first through fourth embodiments. The programs are read and executed by the CPU 810.

Further, "-- unit" that will be explained in the explanation of the following first through fourth embodiments can be implemented by firmware stored in the ROM 811. Or it can be implemented by only software, only hardware, a combination of software and hardware, or a combination with firmware.

Further, programs which implement the following embodiments can be stored using a recording apparatus that is a recording medium such as a magnetic disk drive 820, an FD (Flexible Disk), an optical disk, a CD (Compact Disk), an MD (Mini Disk), a DVD (Digital Versatile Disk), etc.

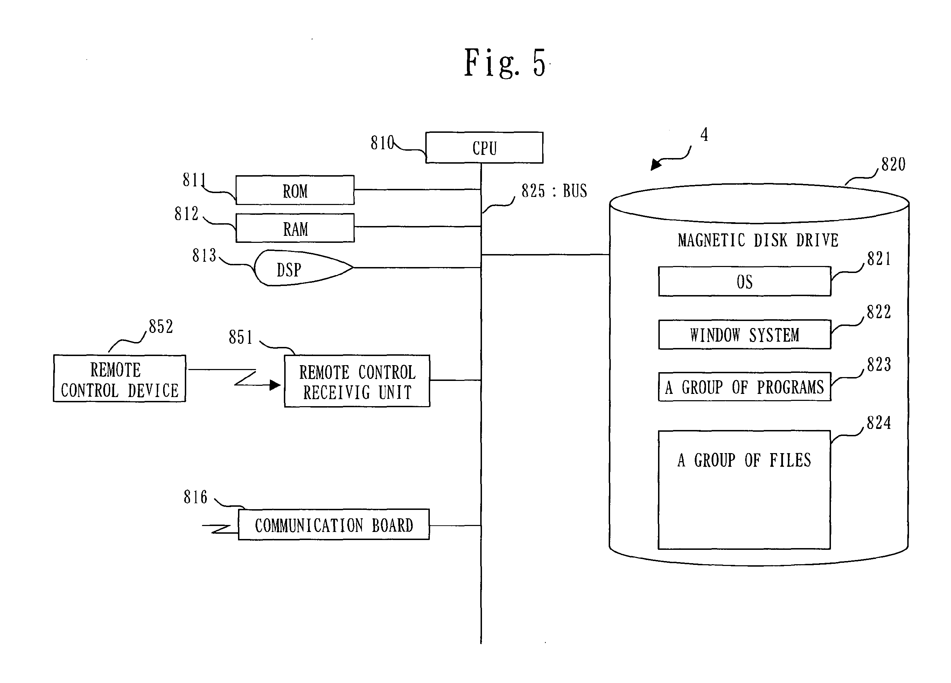

Fig. 5 shows another example of hardware configuration of the terminal apparatus 4. The terminal apparatus 4 is assumed to be an AV (Audio and Visual) equipment for family use such as an STB (Set Top Box) other than the computer systems shown in Figs. 3 and 4. Fig. 5 is a hardware configuration of the case in which the AV equipment is assumed as the terminal apparatus 4. The terminal apparatus 4 shown in Fig. 5 includes a CPU (Central Processing Unit) 810 which executes programs. The CPU 810 is connected to a ROM 811, a RAM 812, a liquid crystal display apparatus 813, a remote control receiving unit 851, a communication board 816, and a magnetic disk drive 820, etc. via a bus 825. A remote control receiving unit 851 receives an operation from a remote control device 852. Further, the communication board 816 is connected to the network 5. The other elements are the same as the case of Fig. 4.

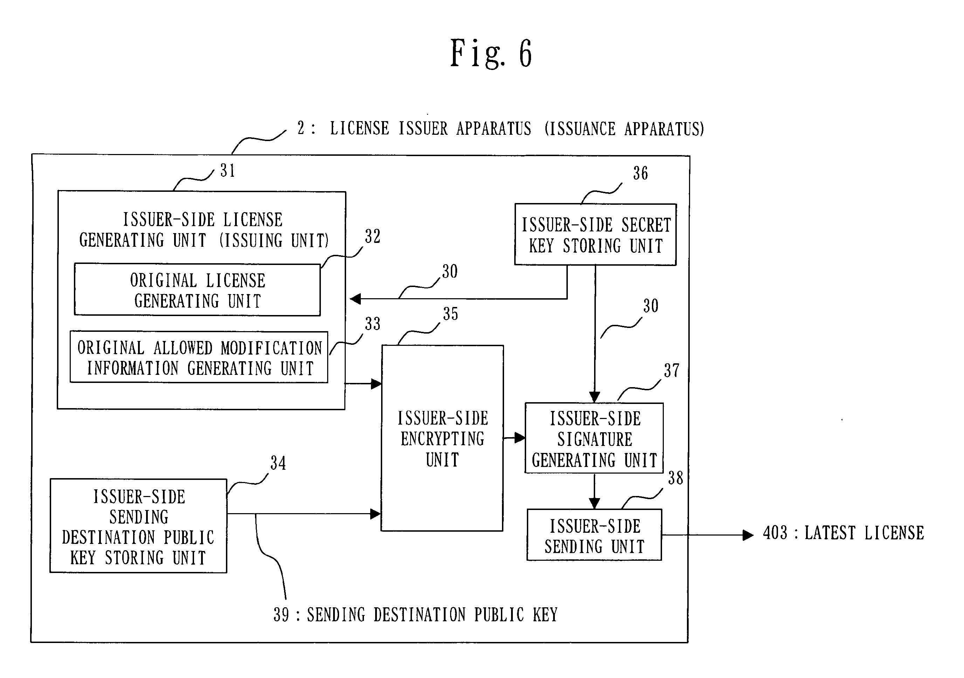

Fig. 6 is a configuration diagram of the license issuer apparatus 2. As shown in the figure, the license issuer apparatus 2 includes an issuer-side license generating unit 31 (an example of an issuing unit), an issuer-side sending destination public key storing unit 34, an issuer-side encrypting unit 35, an issuer-side secret key storing unit 36, an issuer-side signature generating unit 37, and an issuer-side sending unit 38. Further, the issuer-side license generating unit 31 includes an original license generating unit 32 and an original allowed modification information generating unit 33.

The issuer-side license generating unit 31 generates the license 1. The original license generating unit 32 of the issuer-side license generating unit 31 generates an original license. Further, the original allowed modification information generating unit 33 generates original allowed modification information. Here, the original license and the original allowed modification information, etc will be further discussed later.

The issuer-side sending destination public key storing unit 34 stores a sending destination public key 39 which is a public key of an intermediate node of a sending destination to which the generated license (the latest license 403 in Fig. 6) is sent.

The issuer-side encrypting unit 35 encrypts the license generated by the issuer-side license generating unit 31 using the sending destination public key 39 stored by the issuer-side sending destination public key storing unit 34.

The issuer-side secret key storing unit 36 stores the secret key 30.

The issuer-side signature generating unit 37 generates an electronic signature using the secret key 30 stored by the issuer-side secret key storing unit 36.

The issuer-side sending unit 38 sends the license to which the signature is added by the issuer-side signature generating unit 37 to a predetermined intermediate node 3, which is a sending destination, as the latest license 403.

### (2. Generation of license by the license issuer apparatus 2)

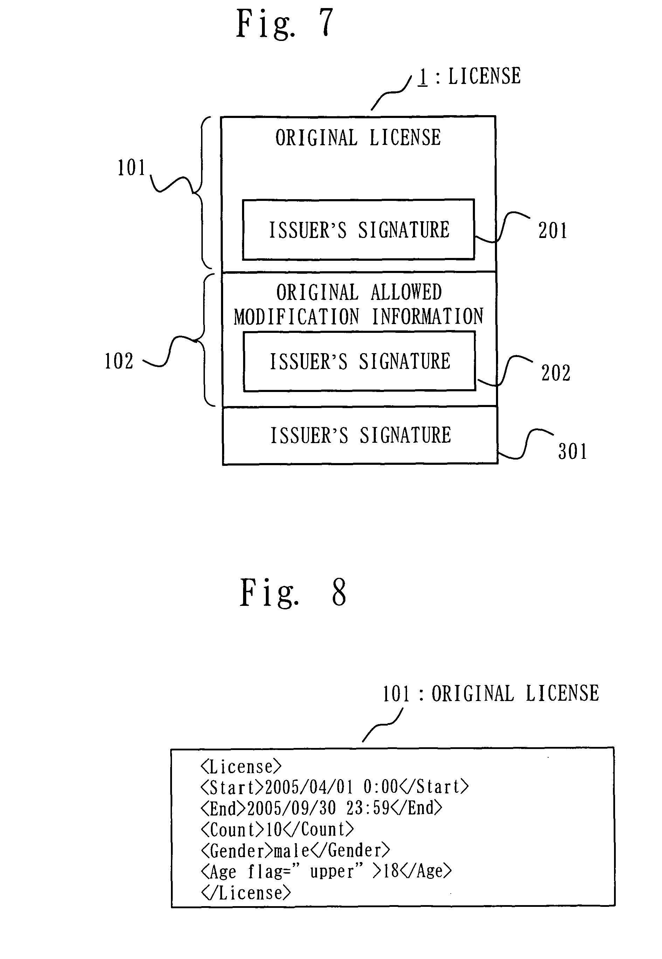

Fig. 7 is a block diagram showing a detailed configuration of the license. Fig. 7 shows a license 1 of initial state generated by the issuer-side license generating unit 31 of the license issuer apparatus 2. The license 1 of initial state includes an original license 101, an original allowed modification information 102, and an issuer's signature 301. "Original" shows information generated by the license issuer apparatus 2.

Here, the original license 101 is an initial license which the license issuer specifies for specific contents. Further, the original allowed modification information 102 is information which defines an allowed range that the license issuer allows the intermediate node 3 to modify the license. The original allowed modification information 102 maintains information allowing the change and as well showing contents of the change such as who (which node) modifies what (what is a target) and how as discussed later. An issuer's signature 201 is added to the original license 101. Further, an issuer's signature 202 is added to the original allowed modification information 102.

Fig. 8 shows an example of the original license 101 generated by the original license generating unit 32. Referring to Fig. 8, the original license 101 will be explained. In the original license 101 of Fig. 8, the following items are specified as a right to use:
(1) starting date and time of visible-audible period shown by <Start>;
(2) ending date and time of visible-audible period shown by <End>;
(3) the number of visible-audible times shown by <Count>;
(4) a gender of visible-audible person shown by <Gender>; and
(5) a visible-audible age shown by <Age flag="upper">.

The original license 101 of Fig. 8 shows that predetermined contents is visible-audible by men of at least 18 years old by 10 times from 0:00 of April 1, 2005 through 23:59 of September 30, 2005.

Here, in an example of Fig. 8, the original license 101 is shown by XML (extensible Markup Language) format. However, the written format does not always have to be XML. Any language format can be used to write.

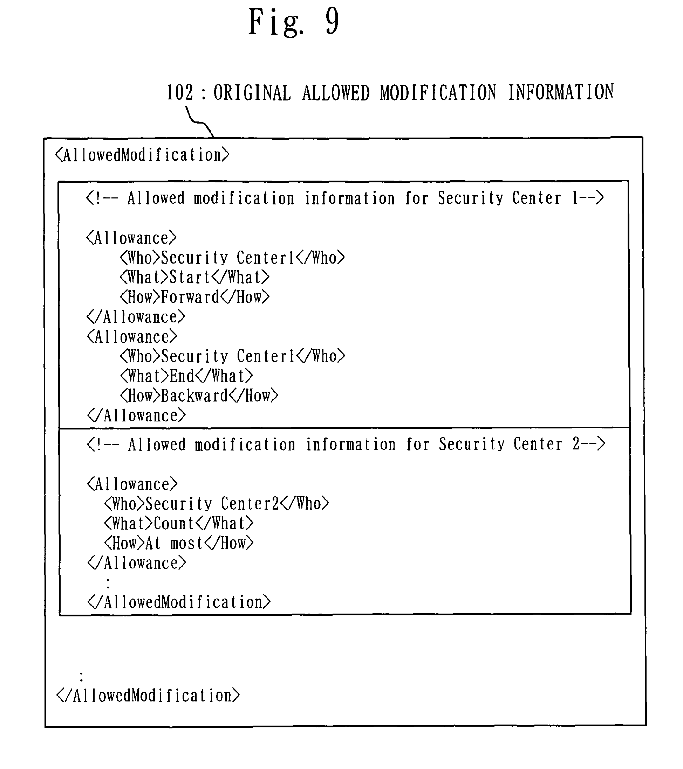

Next, the original allowed modification information 102 will be explained by referring to Fig. 9. Fig. 9 shows an example of the original allowed modification information 102 generated by the original allowed modification information generating unit 33. As discussed in the explanation of Fig. 7, the original allowed modification information 102 is information which defines an allowed range that the license issuer allows the intermediate node 3 to modify the license and maintains information such as who (which node) can modify what and how.

Fig. 9 shows that the intermediate node 3 shown by Security Center 1 can modify the starting date and time of visible-audible period (Start tag) in the future direction, and further, modify the ending date and time of visible-audible period (End tag) in the past direction. Further, the intermediate node 3 shown by Security Center 2 can modify the number of visible-audible times (Count tag) in a range of the number specified by the original license 101.

Here, in the example of Fig. 9, the original allowed modification information 102 is shown by XML format, however, it is not limited to the XML format, but can be written by any format.

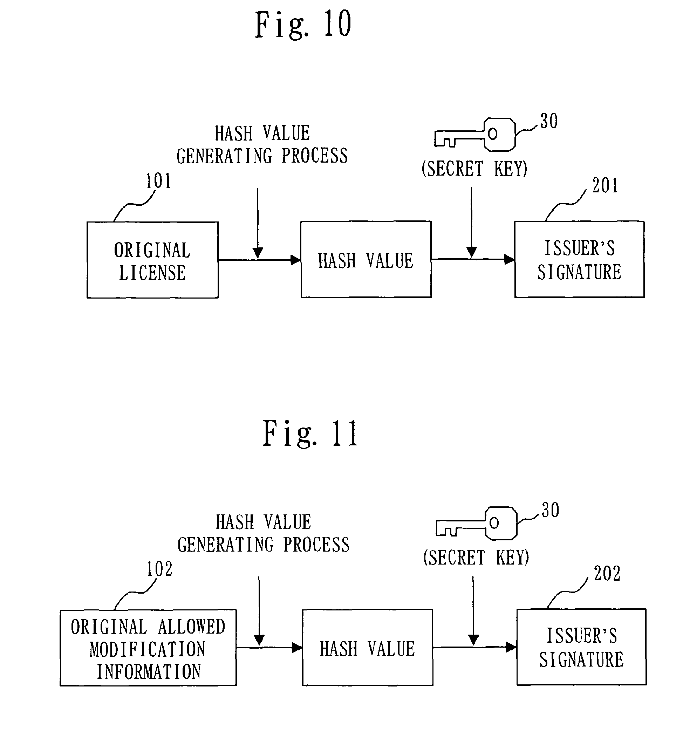

Next, by referring to Fig. 10, the issuer's signature 201 of Fig. 7 will be explained. The issuer's signature 201 is a signature of the issuer for the original license 101. The issuer's signature 201 is generated by the issuer-side license generating unit 31. The issuer-side license generating unit 31 generates a hash value of the original license 101 by a hash generating unit (not shown) which generates a hash value using hash algorithm such as SHA-1 or MD 5, etc. Further, the issuer-side license generating unit 31 encrypts the hash value generated by the hash generating unit using the secret key 30 stored by the issuer-side secret key storing unit 36 to generate the issuer's signature 201.

The license issuer apparatus 2 can prevent falsification of the original license by the intermediate node using the issuer's signature 201.

Next, by referring to Fig. 11, the issuer's signature 202 of Fig. 7 will be explained. The generation of the issuer's signature 202 is the same as the case of the issuer's signature 201. The issuer's signature 202 is a signature of the issuer for the original allowed modification information 102. The issuer's signature 202 is generated by the issuer-side license generating unit 31. The issuer-side license generating unit 31 generates a hash value of the original allowed modification information 102 by a hash generating unit (not shown) which generates a hash value using hash algorithm such as SHA-1, MD5, etc. Then, the issuer-side license generating unit 31 encrypts the hash value of the original allowed modification information 102 generated by the above hash generating unit using the secret key 30 stored by the issuer-side secret key storing unit 36 to generate the issuer's signature 202.

The license issuer apparatus 2 can prevent falsification of the original allowed modification information by the intermediate note using the issuer's signature 202.

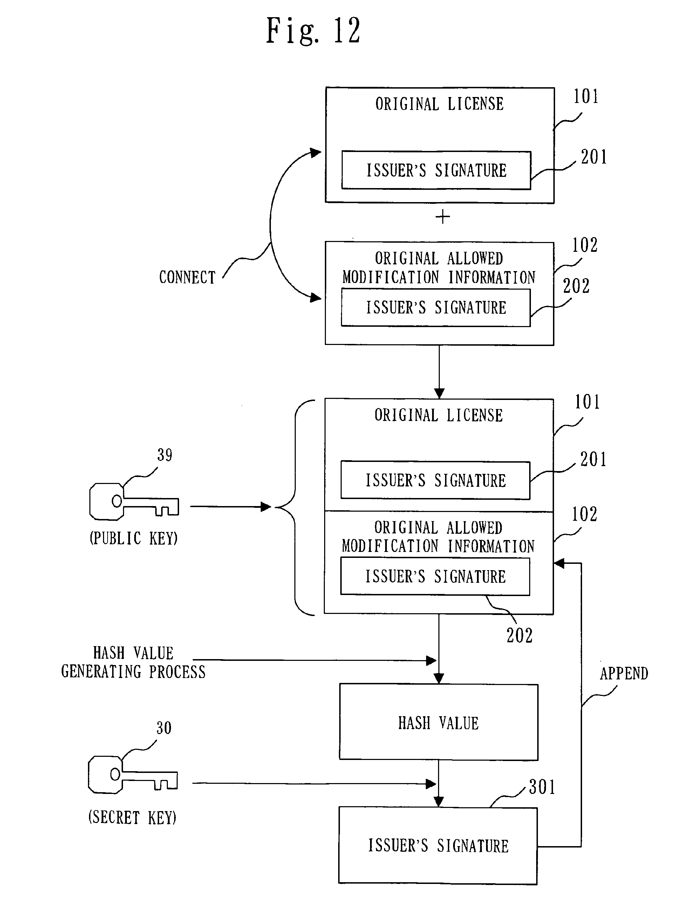

Next, by referring to Fig. 12, generation of a license to be sent to the intermediate node 3 and an issuer's signature 301 of Fig. 7 will be explained. The issuer-side license generating unit 31 of the license issuer apparatus 2 connects the original license 101 to which the issuer's signature 201 is added and the original allowed modification information 102 to which the issuer's signature 202 is added to output to the issuer-side encrypting unit 35. This connection as a whole is called as a connected license. Then, the issuer-side encrypting unit 35 encrypts the connected license using a sending destination public key 39 which is a public key of the next intermediate node 3. Or, in the case of concrete implementation, license data (connected license) is not directly encrypted using the public key, but the license data is encrypted using a common key (usually called as "a session key"). Then, the common key (the session key) can be encrypted using the public key, and appended to the license data that has been encrypted. Like this, the encryption of the license data using the public key is intervened by the session key, so that known art can be used, in which the session key that has been encrypted by the public key is appended to the license. The issuer-side encrypting unit 35 outputs the encrypted connected license to the issuer-side signature generating unit 37. The issuer-side signature generating unit 37 generates a hash value of the encrypted connected license similarly to the generation method of the issuer's signature 201. Then, the issuer-side signature generating unit 37 encrypts the hash value using the secret key 30 to generate the issuer's signature 301, and added to the connected license to form a license 1.

By configured like this, it is possible to prevent wiretapping of the license and falsification of the license on the network. Further, this license can be decrypted only at the next intermediate node.

The license issuer apparatus 2 has been explained above. Next, the intermediate node 3 will be explained.

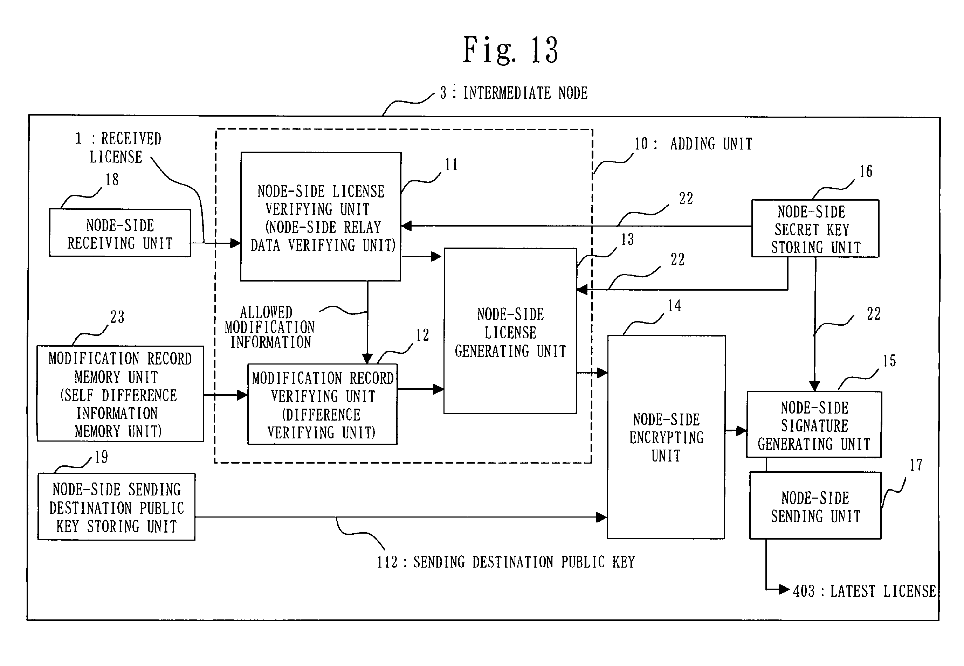

Next, by referring to Fig. 13, the intermediate node 3 of the first embodiment will be explained. Fig. 13 is a configuration of the intermediate node 3 according to the first embodiment.

The intermediate node 3 of the first embodiment includes an adding unit 10 in which a node-side license verifying unit 11 (a node-side relay data verifying unit); a modification record verifying unit 12 (a difference verifying unit); and a node-side license generating unit 13 are provided, a node-side encrypting unit 14, a node-side signature generating unit 15, a node-side secret key storing unit 16, a node-side sending unit 17, a node-side receiving unit 18, a node-side sending destination public key storing unit 19, and a modification record memory unit 23 (a self difference information memory unit).

The node-side secret key storing unit 16 stores the secret key 22.

The node-side sending destination public key storing unit 19 stores a sending destination public key 112 which is a public key of the intermediate node 3 or the terminal 4, which is a sending destination of the license.

The node-side receiving unit 18 receives the license. When the intermediate node in Fig. 13 is assumed to be an intermediate node (N), the license to be received is the latest license 403 sent by the intermediate node (N-1).

The adding unit 10 adds a modified license, which will be discussed later, to the license received by the node-side receiving unit 18 (sometimes called as a received license, hereinafter) to generate a new license.

The node-side license verifying unit 11 verifies the received license received by the node-side receiving unit 18. This verification will be discussed later.

The modification record verifying unit 12 obtains modification record stored by the modification record memory unit 23 to verify if the obtained modification record is correct or not. This verification will be discussed later.

The node-side license generating unit 13 adds a modified license, which is generated based on the modification record of which correctness is verified by the modification record verifying unit 12, to the received license of which correctness is verified by the node-side license verifying unit 11 to generate a new license.

The node-side encrypting unit 14 encrypts the license generated by the node-side license generating unit 13 using a sending destination public key 112 stored by the node-side sending destination public key storing unit 19.

The node-side signature generating unit 15 adds a signature to an encrypted license encrypted by the node-side encrypting unit 14 using the secret key 22 stored by the node-side secret key storing unit 16.

The node-side sending unit 17 sends the latest license 403 to which the signature is added by the node-side signature generating unit 15 to another intermediate node or the terminal 4.

The modification record memory unit 23 stores the modification record.

### (3. Modification of license at the intermediate node and appending of the modified license)

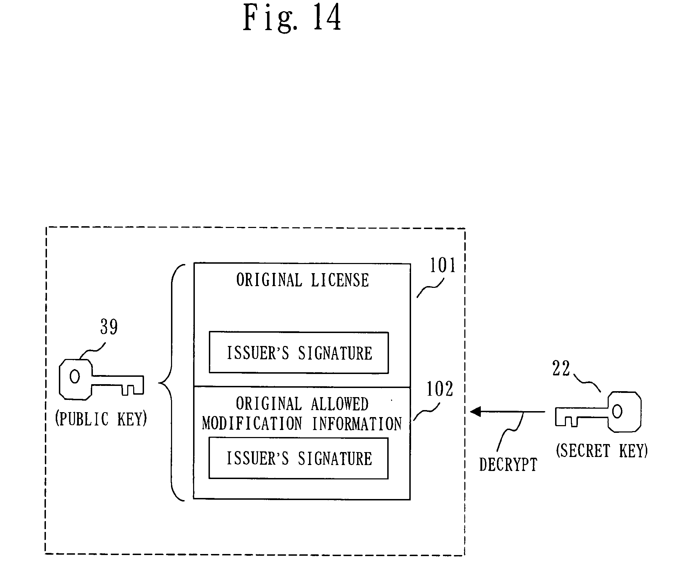

Fig. 14 is a diagram showing that the node-side license verifying unit 11 of the adding unit 10 decrypts the encrypted connected license shown in Fig. 12 using the secret key 22 stored by the node-side secret key storing unit 16 at the intermediate node which receives the license. After decrypting the connected license by the node-side license verifying unit 11, the adding unit 10 of the intermediate node 3 modifies the license in a range allowed by the original allowed modification information 102.
Namely, the adding unit 10 generates a modified license which is a license generated by changing the original license in a range of the original allowed modification information 102.

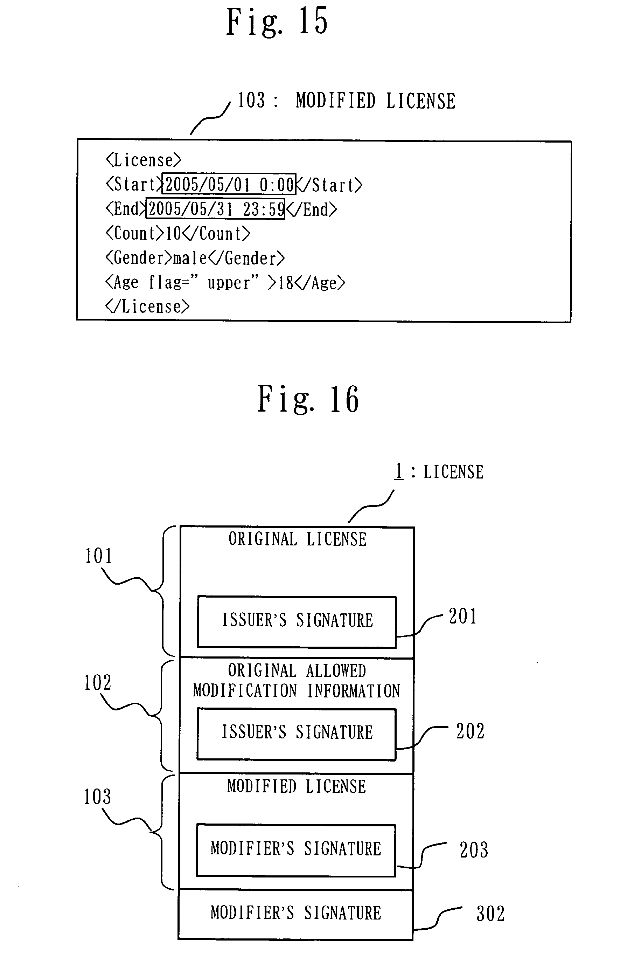

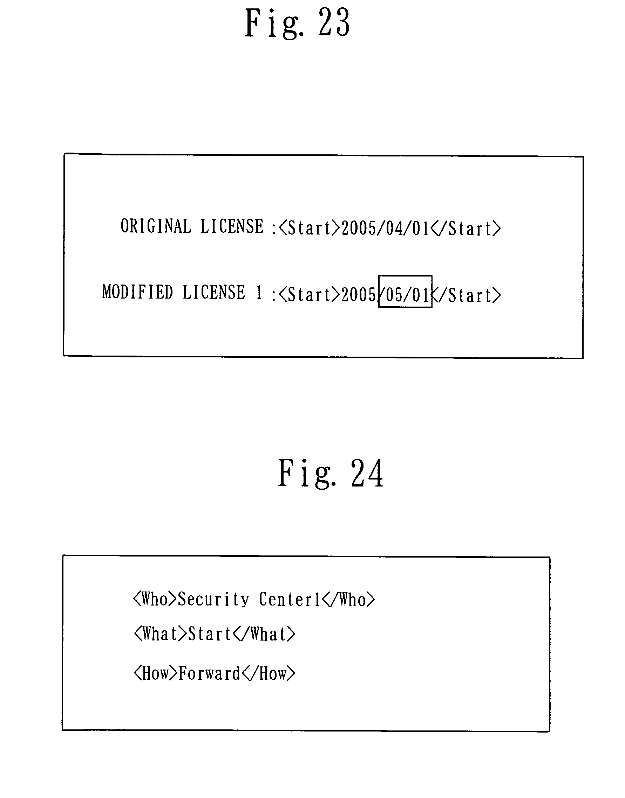

Fig. 15 is a diagram showing an example of a modified license 103 generated by the adding unit 10. The node-side license generating unit 13 of the adding unit 10 inputs the received license which has been verified by the node-side license verifying unit 11 and the modification record, discussed later, verified by the modification record verifying unit 12. It will be discussed later in the explanation of Fig. 23; the modification record is difference information showing the change of a part or all of the original license. Then, the node-side license generating unit 13 reflects the contents shown by the modification record (difference information) to the original license included in the received license to generate the modified license by changing the original license to the contents shown by the modification record.

Items of the right to use shown by the modified license 103 of Fig. 15 are the same as ones of the original license. The original license 101 of Fig. 8 includes five items of <Start> through <Age>, and the modified license 103 includes the same. In the example of Fig. 15, the starting date and time of visible-audible period shown by <Start> is changed from 0:00 April 1, 2004 of the original license to 0:00 May 1, 2005 in the future. Further, the ending date and time of visible-audible period shown by <End> is changed from 23:59 September 30, 2004 of the original license to 23:59 May 31, 2005 in the past.

Fig. 16 is a block diagram showing a detailed configuration of the license after modified by the adding unit 10 of the intermediate node 3. A modifier's signature 302 is generated and added by the node-side signature generating unit 15, a detail of which will be discussed later. As shown in the figure, the license 1 after modification includes the original license 101, the original allowed modification information 102, the modified license 103, the modifier's signature 302, etc.

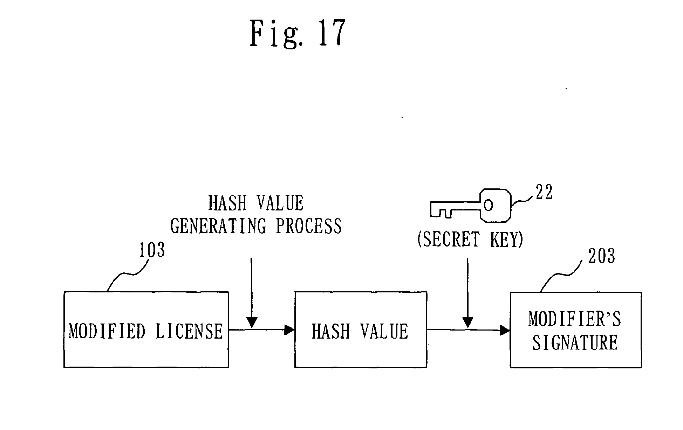

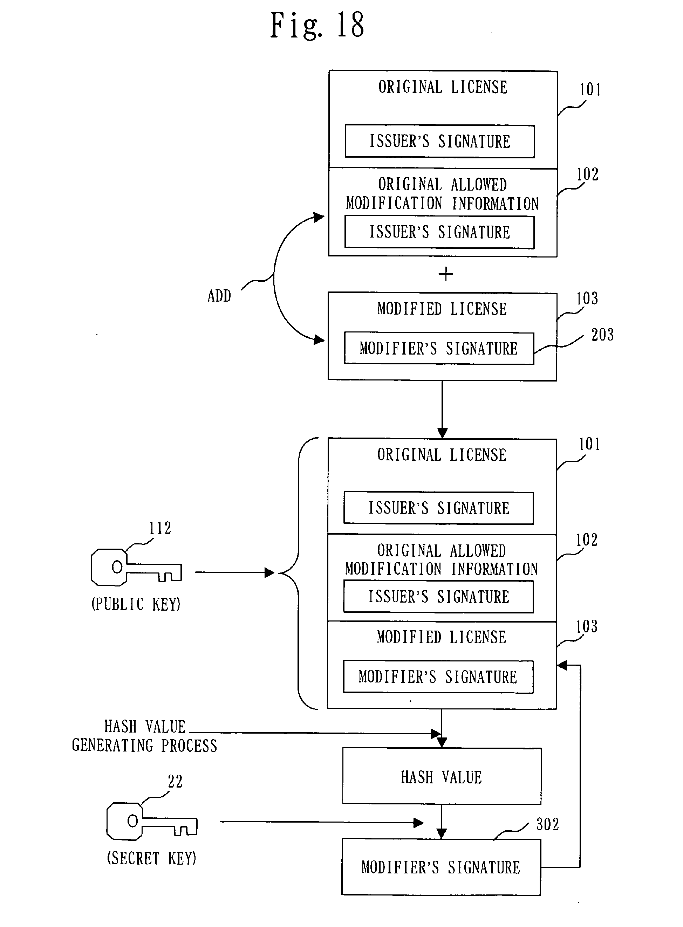

By referring to Fig. 17, a modifier's signature 203 will be explained. The node-side license generating unit 13 of the intermediate node 3 generates the modified license 103. The generation of the modifier's signature 203 is the same as the one of the issuer's signature 201 or the issuer's signature 202 which has been discussed using Figs. 10 and 11. The node-side license generating unit 13 generates a hash value of the modified license 103 using the hash generating unit (not shown) which generates a hash value using hash algorithm such as SHA-1 or MD5. Then, the node-side license generating unit 13 encrypts the hash value of the modified license 103 generated by the above hash generating unit using the secret key 22 stored by the node-side secret key storing unit 16 to generate the modifier's signature 203. The node-side license generating unit 13 adds the modifier's signature 203 to the modified license 103. The node-side license generating unit 13 appends the modified license 103 to which the modifier's signature 203 is added after the original allowed modification information 102 as shown in Fig. 18.

Fig. 18 explains appending of the modified license 103 and generation of the modifier's signature 302.
(1) The node-side license generating unit 13 appends the modified license 103 to which the modifier' s signature 203 is added after the original allowed modification information 102, which makes a connected license by further connecting the modified license 103 to the connection of the original license 101 and the original allowed modification information 102. Then, the node-side license generating unit 13 outputs the connected license to which the modified license 103 is appended to the node-side encrypting unit 14.
(2) The node-side encrypting unit 14 inputs the above connected license and encrypts the whole connected license using a sending destination public key 39 as shown in Fig. 18. The sending destination public key 39 is a public key stored by the node-side sending destination public key storing unit 19, which is the public key of the intermediate node 3 that is a sending destination or the public key of the terminal 4 that is a sending destination. The node-side encrypting unit 14 outputs the encrypted connected license using a sending destination public key 112 to the node-side signature generating unit 15.
(3) The node-side signature generating unit 15 generates a hash value of the encrypted connected license and generates the modifier's signature 302 by encrypting the hash value using the secret key 22. The node-side signature generating unit 15 adds the modifier's signature 302 generated to the encrypted connected license.
(4) The node-side sending unit 17 sends the connected license as the latest license 403, to which the modifier's signature 302 is added by the node-side signature generating unit 15, to the next intermediate node or the terminal.

Like this, at the time of modifying the license, by not only using the modified license 103 after modification, but also using the connected form of the original license 101 and the original allowed modification information 102 to the modified license, it is possible for the succeeding intermediate node 3 or the terminal 4 which receives the connected license to judge if the modification of the license at the preceding intermediate node is correct or not.

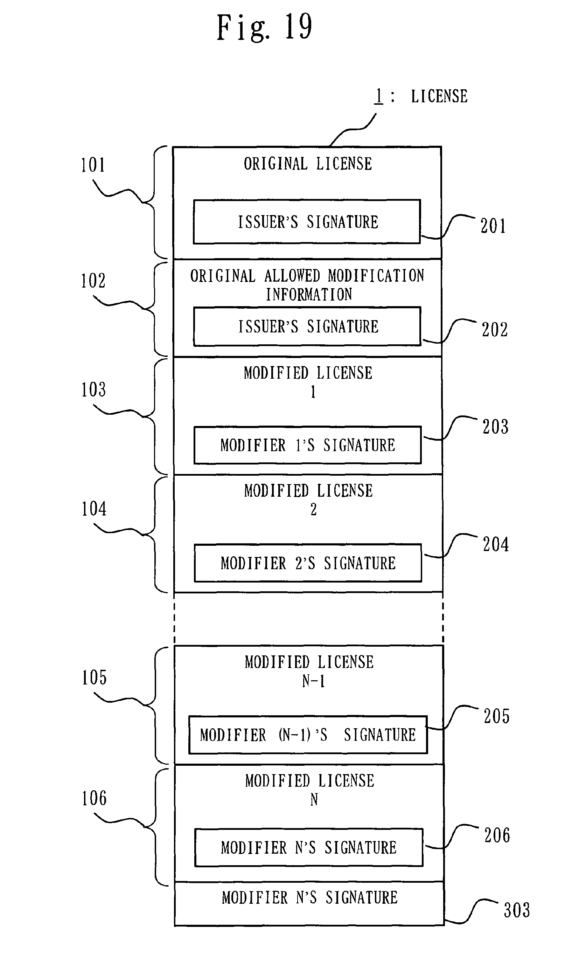

Fig. 19 is a block diagram showing a detailed configuration of the license 1 after N number of intermediate nodes 3 as shown in Fig. 1 repeatedly appends the modified license 103 to the license 1. If the intermediate node (N+1) receives the license 1 (an example of relay data) of Fig. 19, each of the modified license (1) 103 through the modified license (N) 106 is the modified license generated by the intermediate node other than the intermediate node (N+1) (an example of other node changing data). Each intermediate node 3 generates the modified license (1) 103 through the modified license (N) 106 sequentially and adds the modifier 1's signature 203 through the modifier N's signature 206. Then, each intermediate node appends the modified license 103 through 106 generated by the node itself to the received license. Each intermediate node repeats this appending. For example, the intermediate node (N) 3 adds the modifier N's signature 303 for the whole license encrypted by the public key of the next receiver, and the license 1 of Fig. 19 is formed.

In the foregoing description, the license generated by the license issuer apparatus 2, the modification of license by the intermediate node, and their configurations have been explained. In the following, verification of the correctness of the received license by the intermediate node 3 or the terminal 4, verification of the correctness of modification of the license, and generation of license will be explained.

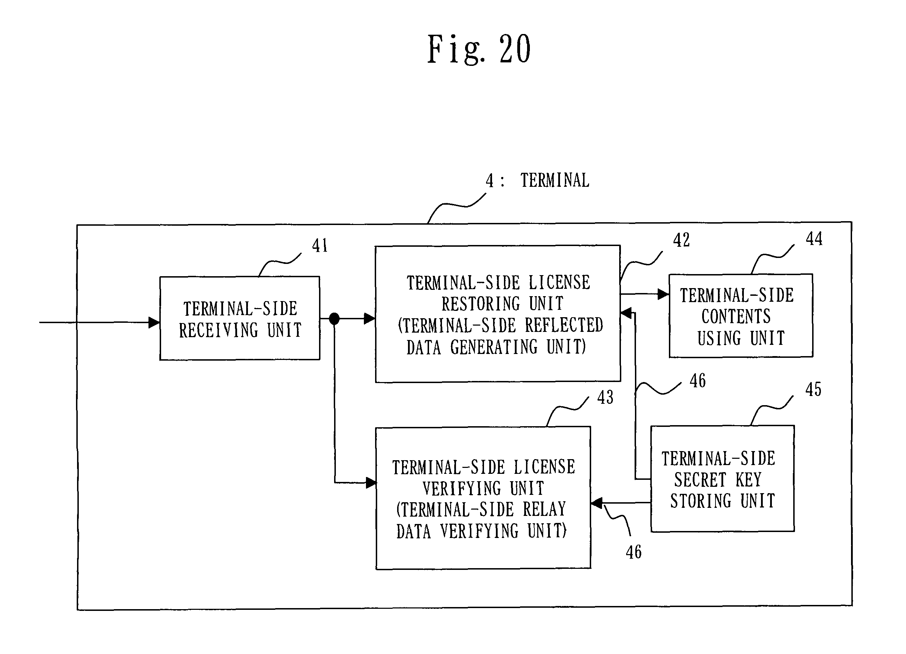

First, the configuration of the terminal 4 will be explained by referring to Fig. 20.

The terminal 4 includes a terminal-side receiving unit 41, a terminal-side license restoring unit 42 (a terminal-side reflected data generating unit), a terminal-side license verifying unit 43 (a terminal-side relay data verifying unit), a terminal-side contents using unit 44, and a terminal-side secret key storing unit 45.

The terminal-side receiving unit 41 receives the license sent by the intermediate node 3. The terminal-side secret key storing unit 45 stores the secret key 46. The terminal-side license verifying unit 43 verifies the license decrypted using the secret key 46. The terminal-side license restoring unit 42 restores the received license decrypted using the secret key 46. The terminal-side license restoring unit 42 will be discussed in the second embodiment. The terminal-side contents using unit 44 reproduces the contents based on the received license and so on.

### (4. Verification of the received license by the intermediate node or the terminal)

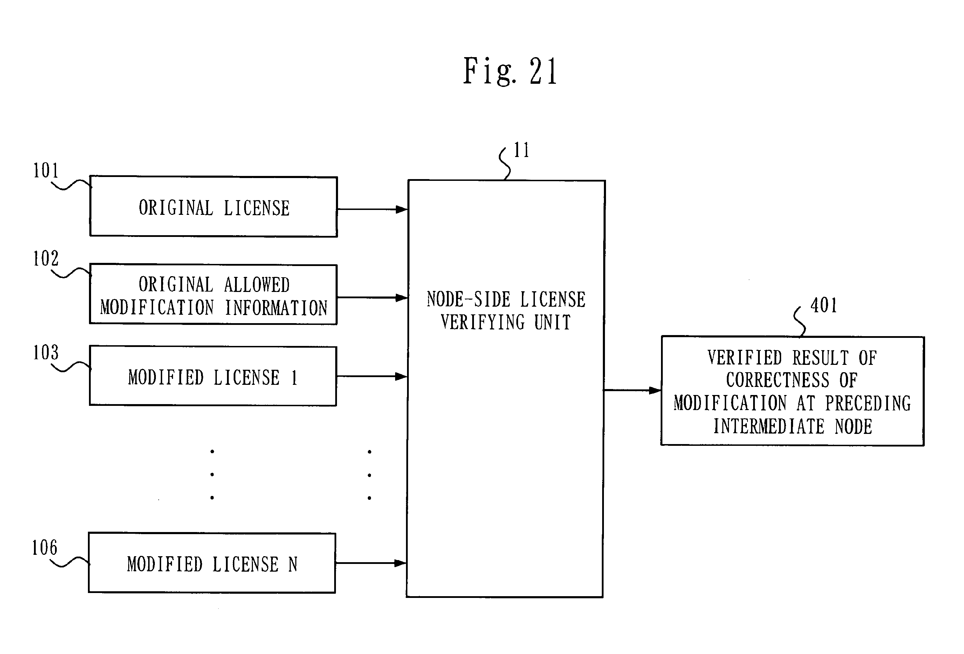

By referring to Fig. 21, verification of the received license by the intermediate node or the terminal will be explained. Fig. 21 explains the node-side license verifying unit 11 of the intermediate node 3. Further, the operation of the terminal-side license restoring unit 42 of the terminal 4 is the same with the operation of the node-side license verifying unit 11, so that the explanation will be omitted.

Fig. 21 is a block diagram of the node-side license verifying unit 11 included in the intermediate node 3. In the figure, the node-side license verifying unit 11 inputs the original license 101, the original allowed modification information 102, and the modified license (1) 103 through the modified license (N) 106 extracted from the received license. Then, the node-side license verifying unit 11 discriminates if the license modification at the preceding intermediate node 3 is within the range of the original allowed modification information 102 or not, and outputs the discriminated result as a correctness verified result 401 of the modification at the preceding intermediate node.

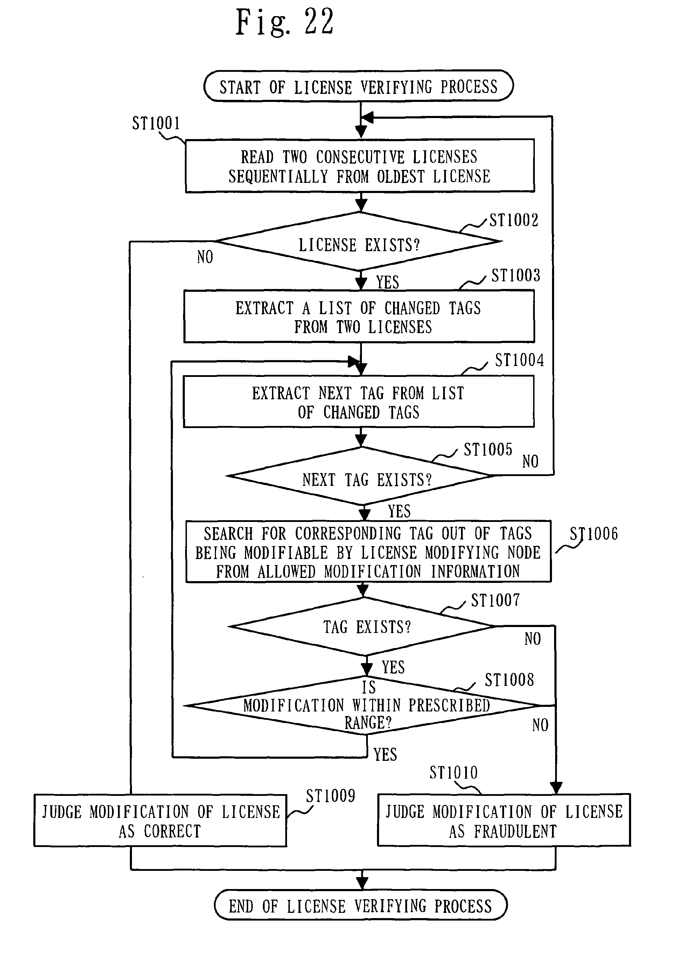

By referring to Fig. 22, the operation of the node-side license verifying unit 11 will be explained. Fig. 22 is a flowchart of verifying process of the received license by the node-side license verifying unit 11.
(1) At step ST1001, the node-side license verifying unit 11 reads two consecutive licenses sequentially from the oldest including the original license 101. For example, as shown in Fig. 19, when the received license 1 includes the original license 1, and the modified license (1) through the modified license (N), the node-side license verifying unit 11 reads as "the original license 1 and the modified license (1)", "the modified license (1) and the modified license (2)", "the modified license (2) and the modified license (3)", ...
(2) When the licenses are read, at step ST1003, the node-side license verifying unit 11 extracts the difference between the two licenses and obtains a list of tags changed. For example, as shown in Fig. 23, it is assumed that <Start> tag is changed. Fig. 23 shows relation between <Start> tags of Figs. 8 and 15. The modified license 1 of Fig. 23 corresponds the modified license 103 of Fig. 15. In the case of Fig. 23, the node-side license verifying unit 11 extracts <Start> tag.
(3) At step ST1004, the node-side license verifying unit 11 obtains one tag from the list of changed tags.
(4) At step ST1006, the node-side license verifying unit 11 searches for the changed tag which has obtained just before from tags which are modifiable by the modification node of the license.
(5) At step ST1007, the node-side license verifying unit 11 discriminates the existence of tag, and if the tag exists, the operation proceeds to step ST1008. For example, it is assumed to be a case of the original allowed modification information 102 of Fig. 9.
   Fig. 24 is a figure showing a part related to <Start> tag extracted from the original allowed modification information 102 of Fig. 9. Since there is description of <What>Start<What>, the node-side license verifying unit 11 proceeds to the process of Yes (ST1008) of S1007. Further, in the example of Fig. 24, the change is "Forward", so that it is within the range. Therefore, the node-side license verifying unit 11 also proceeds to the process of Yes at ST1008.
(6) If no tag exists, it is judged that the corresponding intermediate node 3 has changed the tag which is unchangeable, so that the modification of the license is judged as fraudulent at step ST1010, and the license verifying process terminates.

(7) At step ST1008, the node-side license verifying unit 11 discriminates if the contents modified by the corresponding tag is within the range of the original allowed modification information or not, and if it is within the range, the operation returns to step ST1004 to repeat the same discrimination on the next changed tag.
(8) If it is not within the range at step ST1008, the node-side license verifying unit 11 judges that the modification of the license is fraudulent at step ST1010, and the license verifying process terminates.

(9) If there is no next tag at step ST1004, the node-side license verifying unit 11 returns to step ST1001 from step ST 1005, and reads the next two consecutive licenses and discriminates in the same manner.
(10) The node-side license verifying unit 11 discriminates the correctness of all license modifications, and if it is judged that there is no license to be discriminated at step ST1002, the operation proceeds to step ST1009, the preceding license modifications are judged as correct, and the license verifying process terminates.

The above discussed is the verifying flow of license by the intermediate node 3 or the terminal 4. Like this, by verifying the correctness of modification of licenses with apparatuses or programs, it is possible to eliminate human error and to accomplish correct license delivery.

### (5. Modified history and verification of correctness of the modified history by the intermediate node)

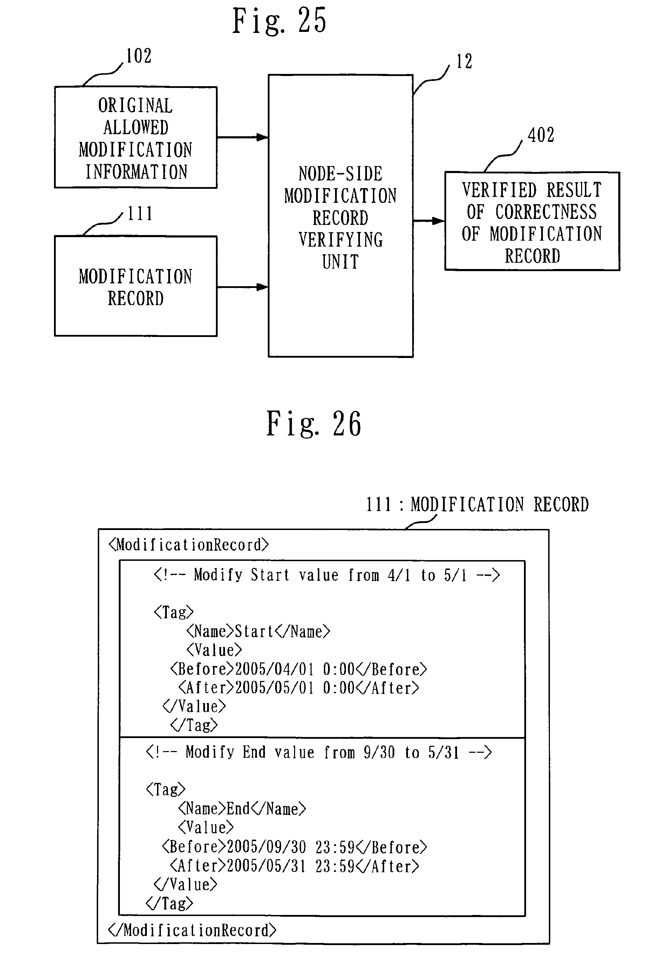

Fig. 25 is a block diagram of the modification record verifying unit 12 provided in the intermediate node 3. The modification record verifying unit 12 inputs the original allowed modification information 102 included in the received license and the modification record 111, discriminates if the modification record is within the range of the original allowed modification information 102 or not, and outputs the result as a correctness verified result 402 of the modification record.

Here, the modification record (an example of self difference information) is information showing a part or a whole of difference (change) from the original license 101 and information which is a base to generate the modified license. Namely, the modified license is the original license 101 to which the difference shown by the modification record is reflected.

This modification record is stored by a modification record memory unit 23. The modification record verifying unit 12 obtains the modification record stored by the modification record memory unit 23 from the modification record memory unit 23.
For example, the modification record can be created beforehand by a manager of the intermediate node (a provider) based on the contents of the contract between the issuer of the license and the manager of the intermediate node and can be stored in the modification record memory unit 23.

Or, the manager of the intermediate node confirms beforehand the contents of the original license and the original allowed modification information based on the contract. Then, when the intermediate node receives the received license, it is possible to set beforehand to generate predetermined modification record based on the original license 101 and the original allowed modification information 102 included in the received license. The modification record generated is stored by the modification record memory unit 23.

Further, it is also possible to configure the intermediate node so as to output the original license 101 and the original allowed modification information 102 included in the received license to a display apparatus or a printer, so that the manager of the intermediate node generates the modification record by viewing the output. The modification record generated is stored by the modification record memory unit 23.

Fig. 26 shows an example of description of the modification record. Fig. 26 shows that the value of the starting date and time of visible-audible period (Start tag) is changed from 0:00 April 1, 2005 to 0:00 May 1, 2005, and the ending date and time of visible-audible period (End tag) is changed from 23:59 September 30, 2005 to 23:59 May 31, 2005. Namely, while Fig. 15 shows an example of description of the modified license 103, the modification record 111 of Fig. 26 shows only the difference from the original license.

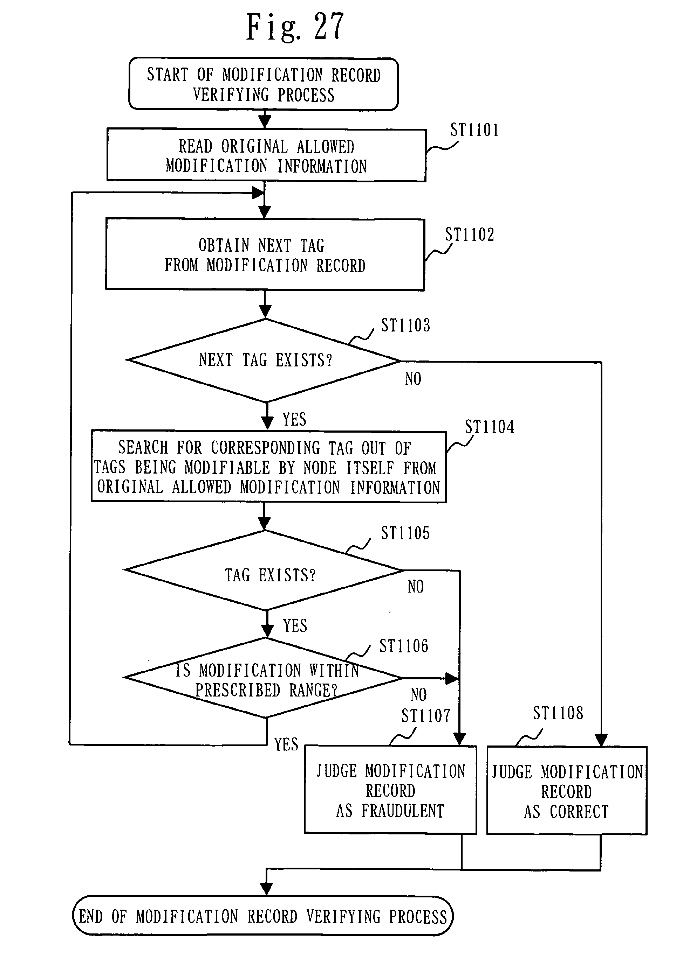

Next, by referring to Fig. 27, the modification record verifying process by the modification record verifying unit 12 will be explained. Fig. 27 is a flowchart of the modification record verifying process by the modification record verifying unit 12.
(1) At step ST1101, the modification record verifying unit 12 reads the original allowed modification information 102 included in the received license.
(2) At step ST1102, the modification record verifying unit 12 obtains the next modification tag from the modification record. If there is a tag, the modification record verifying unit 12 searches for the corresponding tag from tags which are modifiable by the self.
(3) At step ST1105, if the modification record verifying unit 12 judges there is no corresponding tag, it means the self tries to modify the unmodifiable tag, so that at step ST 1107, the modification record is judged as fraudulent, and the modification record verifying process terminates.

(4) If there is the corresponding tag, the modification record verifying unit 12 then discriminates if the modified contents is within the range of the allowed modification or not at step ST1106, and if it is not within the range, the modification record is judged as fraudulent at step ST1107, and the modification record verifying process terminates.

(5) If it is within the range, the modification record verifying unit 12 returns again to step ST1102, and carries out the same process on the next tag. These processes are repeated for the number of tags included in the modification record.
(6) If the processes for all tags have been finished at step ST1103, the modification record verifying unit 12 judges the modification record to be correct at step ST1108, and the modification record verifying process terminates.

The above discussed is a verifying flow of the modification record by the intermediate node. By verifying the correctness of the modification record by an apparatus or a program, it is possible to eliminate human error and accomplish correct license modification.

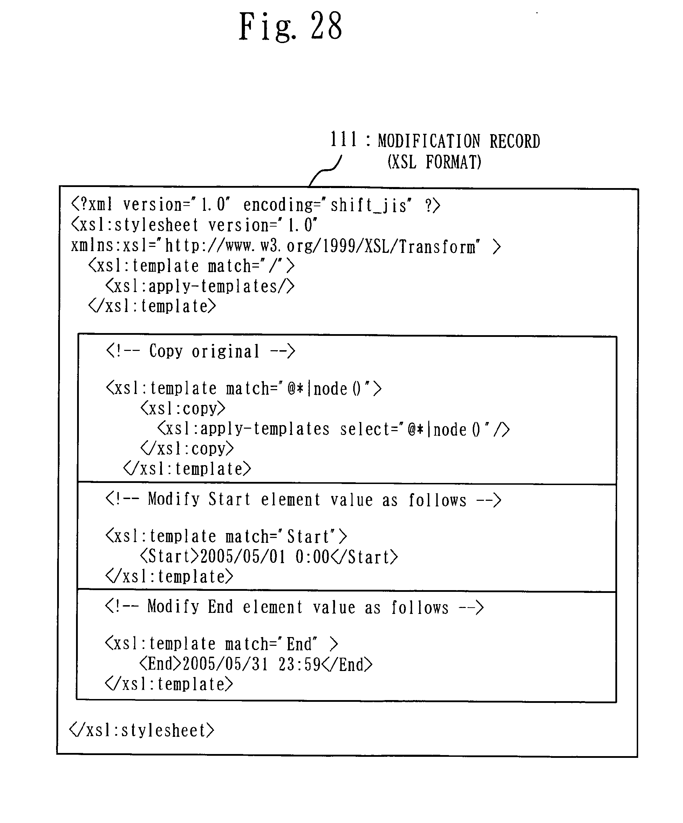

Here, the modified history in a unique format has been explained in Fig. 26; however, the modified history can be in XSL (extensible Stylesheet Language) format as shown in Fig. 28. Although the writing format is different, the contents are equivalent to the ones of Fig. 26. Further, the modified history can be written in any format without sticking to XML format.

### (6. Generation of license by the intermediate node)

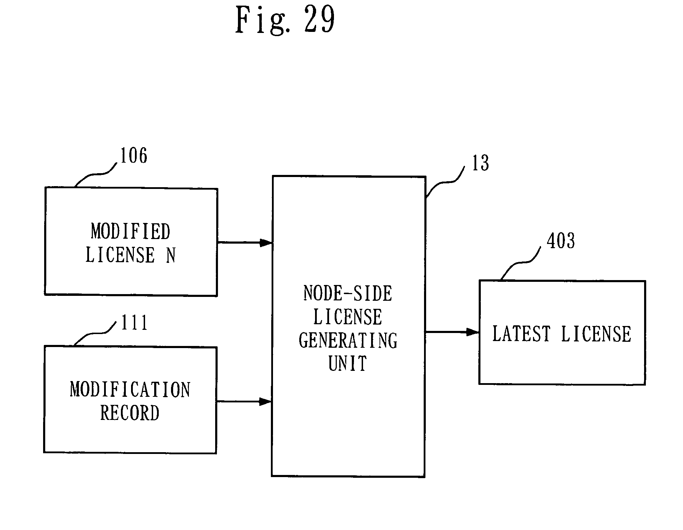

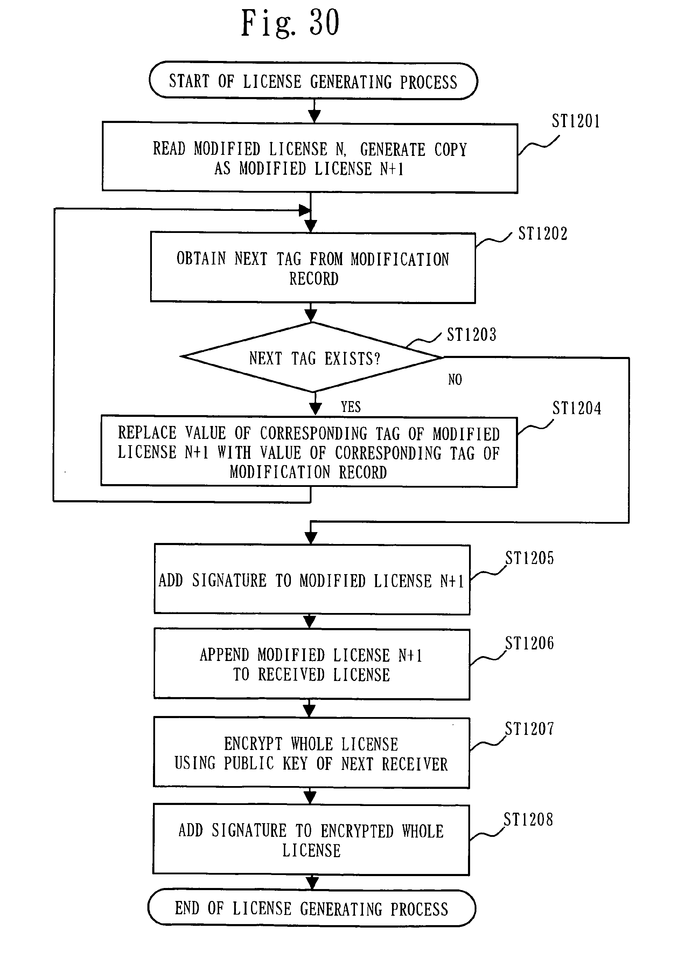

By referring to Figs. 29 and 30, the case in which the intermediate node generates a license will be explained.

Fig. 29 is a block diagram of the node-side license generating unit 13 provided in the intermediate node. In the figure, the node-side license generating unit 13 inputs the modified license (N) and the modification record 111, generates the modified license (N+1), appends the modified license (N+1) to the received license, and outputs the latest license 403.

Fig. 30 is a flowchart showing a license generating process by the node-side license generating unit 13.
(1) At step ST1201, the node-side license generating unit 13 reads the modified license (N) from the received license, and generates a copy as a modified license (N+1).
(2) At step ST1202, the node-side license generating unit 13 obtains the next tag from the modification record. If a tag exists, the node-side license generating unit 13 replaces the value of tag corresponding to the modified license (N+1) with the value of tag of the modification record. This operation is repeated at step ST1203 until there is no next tag. By this operation, the modified license (N+1) to which the modification record is reflected is completed.

(3) Next, at step ST1205, the hash value of the modified license (N+1) is obtained using the hash algorithm such as SHA-1, MD5, etc., and encrypted using the secret key of the apparatus itself to add to the modified license (N+1) as a signature.
(4) At step ST1206, the modified license (N+1), to which the signature is added, is appended to the received license.
(5) At step ST1207, the whole license is encrypted using the public key of the next receiver of license.
(6) Finally, at step ST1208, a signature of the encrypted whole license is calculated in the same manner with the above and added to the end of the whole license, which completes the license generating process.

The above discussed is a processing flow of the license generation by the intermediate node 3. By generating the license by an apparatus or a program, it is possible to eliminate human error and accomplish correct license generation.

Here, the case has been discussed, in which the modified history in the unique format as shown in Fig. 26 is used as the modification record. When the modification record in XSL format as shown in Fig. 28 is used, the node-side license generating unit 13 can be substituted by a general-purpose XSLT (extensible Stylesheet Language Transformation) processor.

By configured as discussed, it is possible to accomplish correct license delivery, while the modification of license by the intermediate node is allowed within the range allowed by the license issuer.

In the license delivery system according to the first embodiment, the intermediate node adds the modified license, which is generated by the node itself, to the received license including the original license and the original allowed modification information and relays. Therefore, the succeeding intermediate node or the terminal can verify the correctness of the license modification by the preceding intermediate node.

The license issuer apparatus of the first embodiment sends the license including the original allowed modification information in addition to the original license. Therefore, the intermediate node can modify the original license based on the original allowed modification information, which enables to deliver various licenses to the terminal.

In the intermediate node of the first embodiment, the adding unit adds the modified license to the received license including the original license and the original allowed modification information, and the node-side sending unit relays the received license to which the modified license is added. Therefore, the succeeding intermediate node or the terminal can verify the correctness of the license modification by the preceding intermediate node.

In the intermediate node of the first embodiment, the modification record verifying unit verifies the modification record, which prevents human error in the license modification.

In the intermediate node of the first embodiment, the node-side license verifying unit verifies the correctness of the received license, which prevents human error.

In the terminal of the first embodiment, the terminal-side license verifying unit verifies the correctness of the received license, which enables to easily detect fraudulent modification by the intermediate node.

### Embodiment 2.

### (7. Appending of the modified history and a processing system possessed by each node)

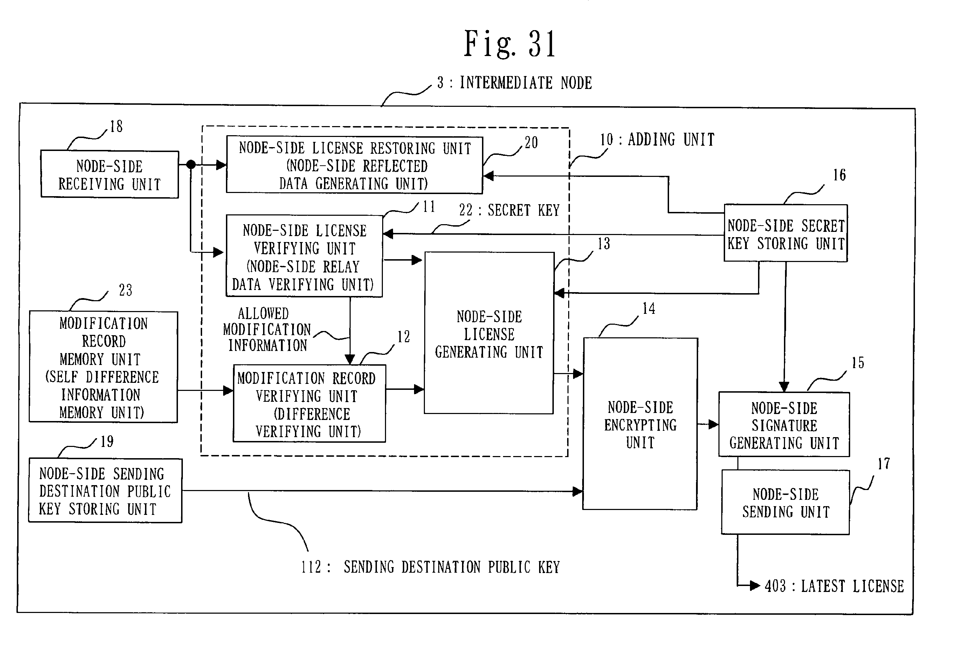

In the following, by referring to Figs. 31 through 38, the second embodiment will be explained. In the first embodiment, the intermediate node 3 appends the modified license 103 to the received license. However, since the license itself is relatively large in size, as the license modification is repeatedly done at the intermediate node 3, there is a problem that the size of the whole license may increase. To solve the problem, this second embodiment will explain a configuration in which the intermediate node appends modification record (self difference information) instead of the modified license as the modified history.

Fig. 31 is a configuration diagram of the intermediate node 3 of the second embodiment. Further, the system configuration of the second embodiment is the same with the one of the first embodiment. Further, the license issuer apparatus 2 and the terminal 4 are the same as the ones of the first embodiment.

The intermediate node 3 of Fig. 31 has a configuration further including a node-side license restoring unit 20 (a node-side reflected data generating unit) in addition to the intermediate node 3 of Fig. 13. The node-side license restoring unit 20 restores the received license. This restoration will be discussed later.

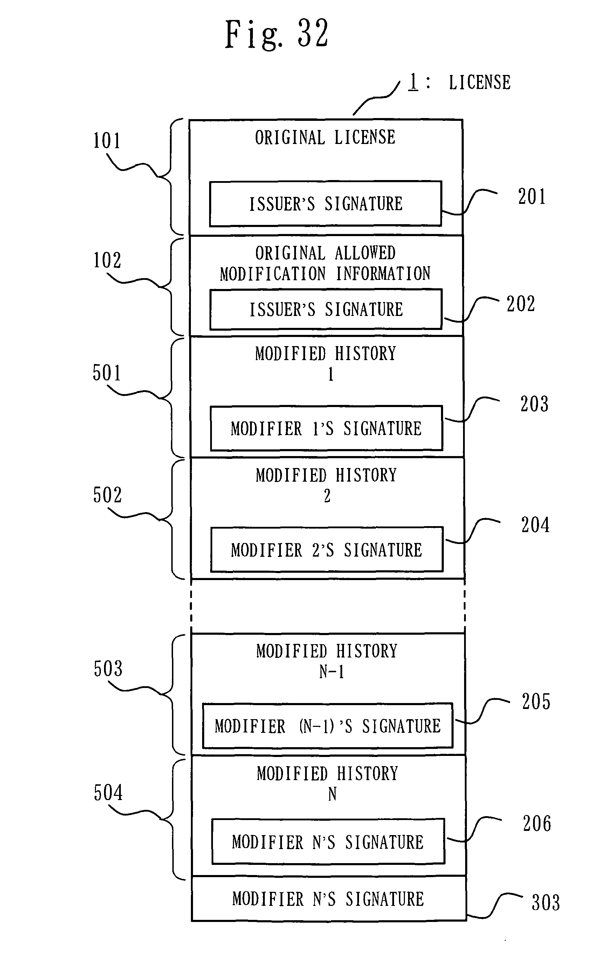

Fig. 32 is a block diagram showing a detailed configuration of the license after the license modification is repeated N times by N intermediate nodes 3. Fig. 32 corresponds to Fig. 19 of the first embodiment. In Fig 32, the modified license 103 through the modified license (N) 106 in Fig. 19 are a modified history (1) 501 through a modified history (N) 504. Modified history is the modification record which has been explained in the first embodiment. It is called as the modified history when each intermediate node appends the modification record to the received license. The license 1 of Fig. 32 receives the same process with the license 1 of Fig. 19. Namely, each intermediate node 3 generates the modified history (1) 501 through the modified history (N) 504 sequentially, adds a modifier 1's signature 203 through a modifier N's signature 206, and appends to the received license. Next, each intermediate node 3 encrypts the whole license using the public key of the next receiver. Finally, the license is formed by adding a modifier N's signature 303 to the encrypted whole license.

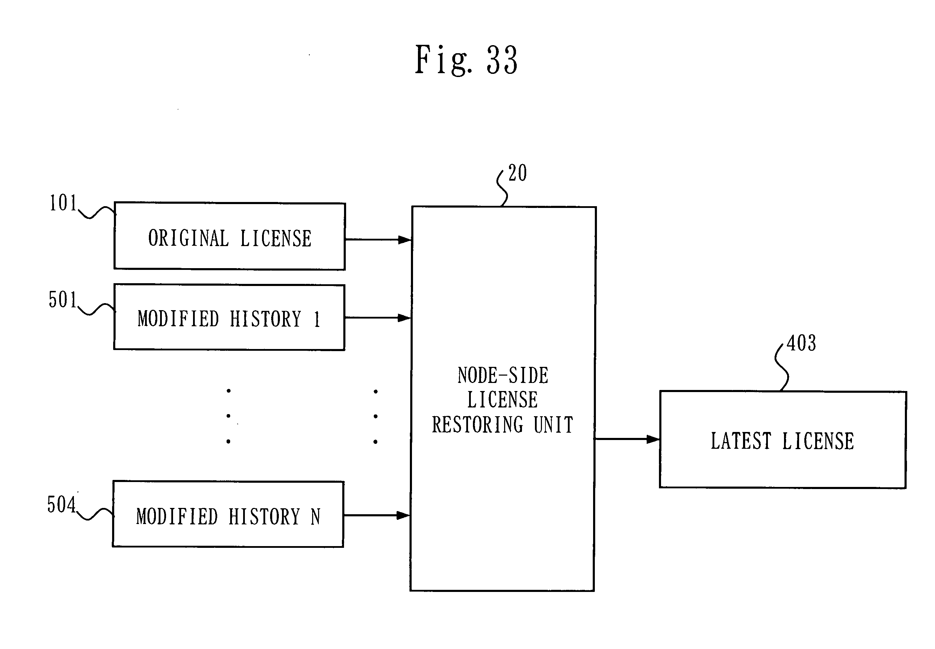

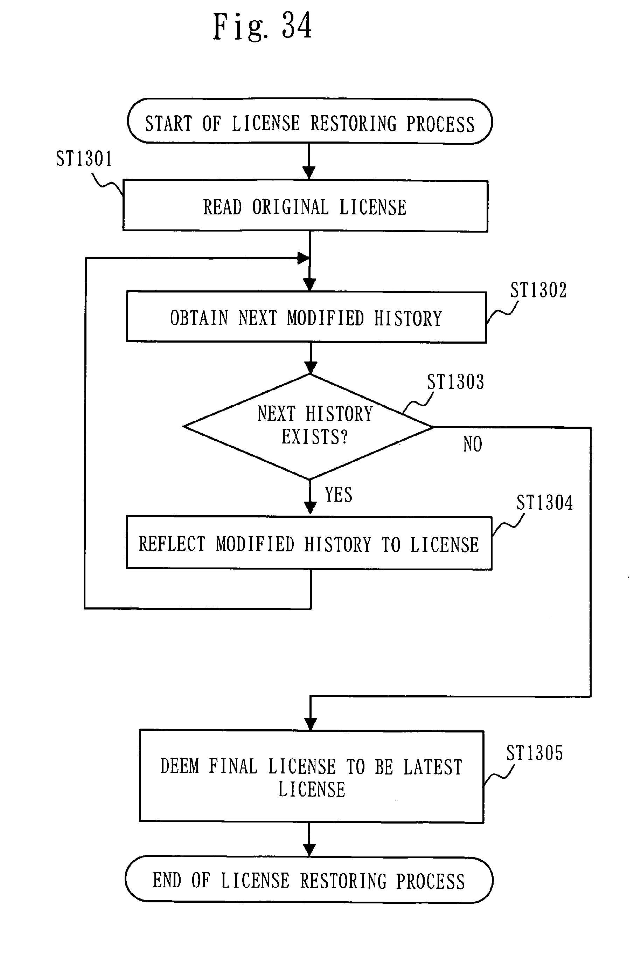

Next, by referring to Figs. 33 and 34, restoration of the license will be explained. When the license is formed as shown in Fig. 32, each intermediate node 3 or the terminal 4 needs to restore the latest license from the original license and plural modified histories included in the license. In order to modify the received license, the intermediate node 3 or the terminal 4 needs to obtain the license which is a base for modification. In the second embodiment, the intermediate node receives the received license written in a format of "the original license + plural modified histories". Therefore, the intermediate node cannot directly refer to the received license. Then, restoration becomes necessary.

Fig. 33 is a block diagram of a node-side license restoring unit 20 provided in the intermediate node 3. By referring to Fig. 33, the restoration of the received license by the intermediate node 3 will be explained. Here, although Fig. 33 explains the intermediate node 3, the operation of a terminal-side license restoring unit 42 of the terminal 4 shown in Fig. 20 is the same as the operation of the node-side license restoring unit 20, so that the explanation will be omitted.

In Fig. 33, the node-side license restoring unit 20 inputs the original license 101 (original data) and the modified history (1) (other node difference information) through the modified history (N) (other node difference information), reflects the modified history to the original license sequentially, and finally obtains the latest license 403.

Fig. 34 is a flowchart showing the restoration of the license by the node-side license restoring unit 20.
(1) At step ST1301, the original license 101 is read, and at step ST1302, the next modified history is obtained. If the modified history exists, at step ST1304, the contents of the modified history is reflected to the original license 101. Concretely, the processes from the steps ST1202 through ST1204 in Fig. 30 are repeated.

(2) This process is repeated at step ST1303 until there is no next modified history. When there exists no modified history, the license generated finally at step ST 1305 is deemed as the latest license 403. By the above processes, the intermediate node 3 or the terminal 4 can restore the latest license 403.

### (8. Verification of the license by the intermediate node or the terminal)

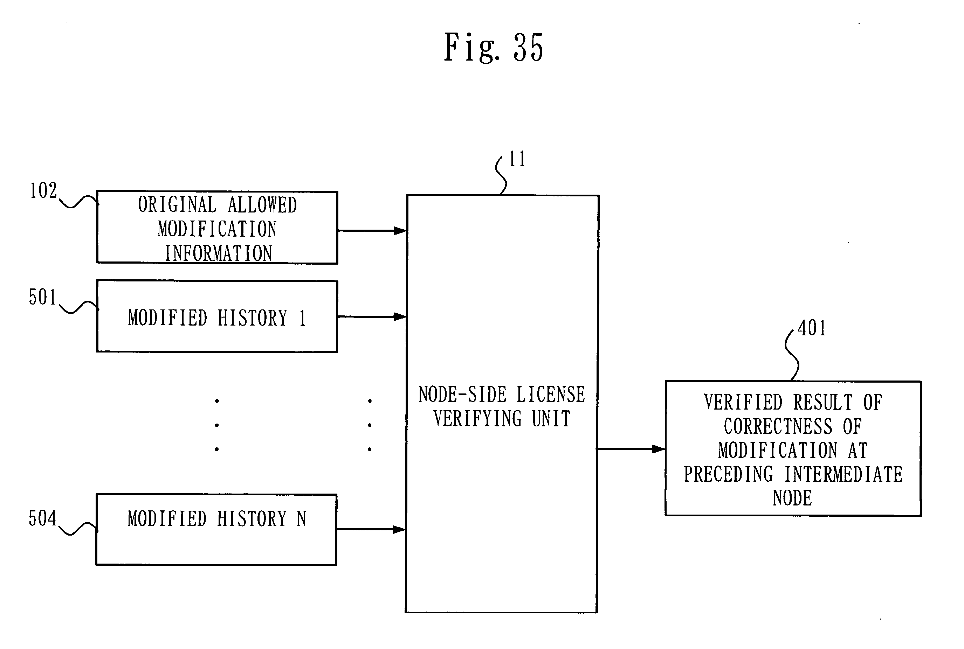

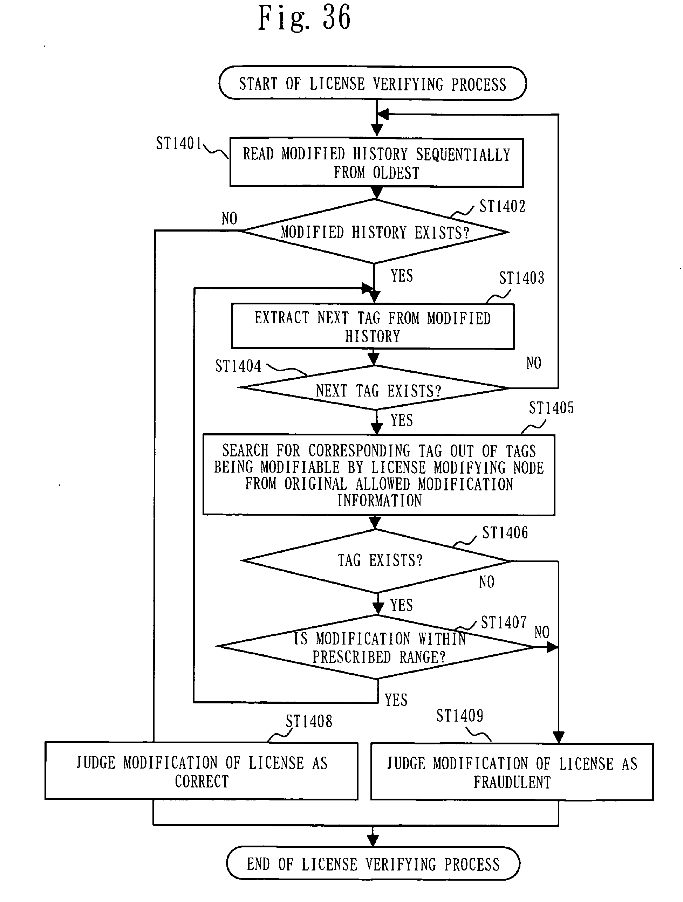

By referring to Figs. 35 and 36, verification of the received license by the node-side license verifying unit 11 of the intermediate node 3 will be explained. The operation of the terminal-side license verifying unit 43 shown in Fig. 20 is the same, so that the explanation of the terminal-side license verifying unit 43 will be omitted.

In the case of the configuration in which the modified history is appended to the license, a method to verify the license is slightly different from the case in which the modified license 103 is appended.

Fig. 35 is a block diagram of the node-side license verifying unit 11 provided in the intermediate node. The node-side license verifying unit 11 inputs the original allowed modification information 102, the modified history (1) (other node difference information) through the modified history (N) (other node difference information) extracted from the received license, discriminates if license modification at preceding intermediate node is within the range of the original allowed modification information or not, and outputs the result as a verified result 401 of correctness of the modification at the preceding intermediate node 3.

Fig. 36 shows a flowchart of the license verifying process by the node-side license verifying unit 11.
(1) At step ST1401, the modified history is read one by one sequentially from the oldest.
(2) If there is the modified history, at step ST1403, a tag is obtained from the modified history sequentially
(3) If there is the tag, at step ST1405, the corresponding tag is extracted from tags included in the original allowed modification information which can be modified by the license modification node.

(4) At step ST 1406, if there is no tag, it is discriminated that an unmodifiable tag has been modified, the modification of the license is judged as fraudulent, and the license verifying process terminates.

(5) At step ST1406, if there is the tag, it is discriminated if the modification is within the allowed range or not at step ST1407. If the modification exceeds the range, the modification of the license is judged as fraudulent, and the license verifying process terminates.

(6) If it is discriminated that the modification is within the range at step ST1407, the operation returns to step ST1403 again, the same process is performed on the next tag included in the modified history.
(7) When the process has been performed for all tags included in the modified history, the operation returns to step ST1401 from step ST1404, and the same process is done on the next modified history.
(8) When this process is repeated at step ST1402 until all the modified histories have been processed, the modification of the license is judged as correct at step ST1408, and the license verifying process terminates.

### (9. Verification of correctness of the modified history by the intermediate node)

Next, the case will be explained, in which the intermediate node verifies if the modification record appended by the node itself as the modified history is correct or not. This is the same case as the first embodiment. Namely, the operation of the modification record verifying unit 12 possessed by the intermediate node when the modified history is appended to the license is the same as the case in which the modified license is appended to the license. The block diagram shown in Fig. 25 and the processing flow of the verification of the modification record shown in Fig. 27 can be directly used also for the case in which the modified history is appended to the license.

### (10. Generation of the license by the intermediate node)

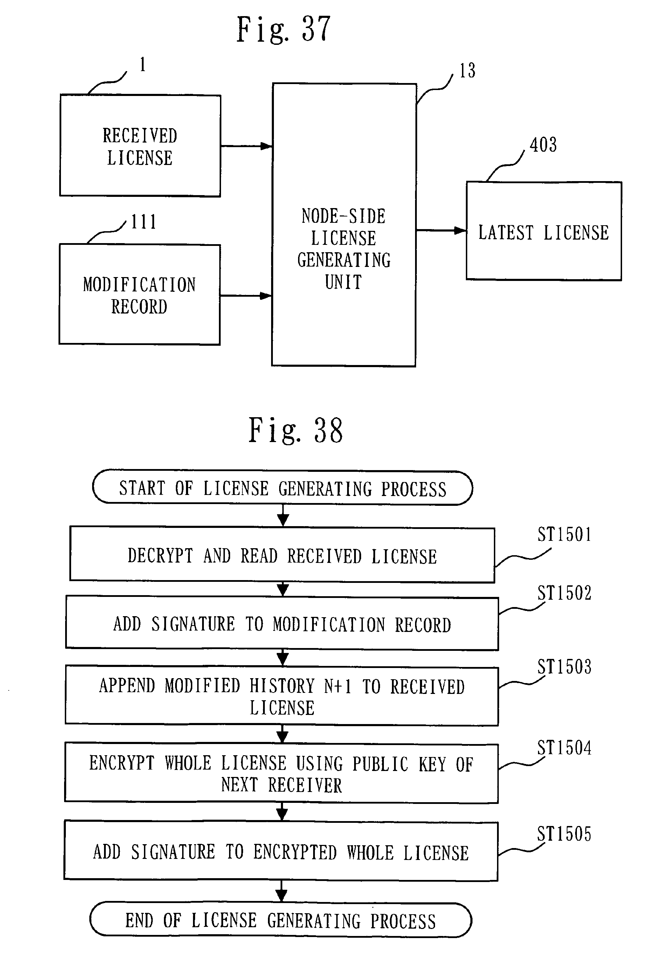

Next, by referring to Figs. 37 and 38, the generation of the license will be explained when the modified history is appended to the license. When the modified history is appended to the license, a method to generate the license at the license generating unit of the intermediate node is slightly different from the case in which the modified license is appended.

Fig. 37 is a block diagram of the node-side license generating unit 13 provided in the intermediate node 3 according to the second embodiment. In the figure, the node-side license generating unit 13 inputs the received license 1 and the modification record 111 and outputs the latest license 403.

Fig. 38 is a flowchart of the license generating process by the node-side license generating unit 13.
(1) At step ST1501, the received license 1 is decrypted using the secret key of the node itself and read.
(2) At step ST1502, a hash value of the modified history, which is prepared beforehand, is generated using the hash algorithm such as SHA-1, MD5, etc., and the hash value encrypted using the secret key of the node itself is added to the modified history as a signature.

### (3) At step ST1503, the modified history, to which the signature is added, is appended to the received license 1.

(4) At step ST1504, the whole license is encrypted using a public key of next receiver.
(5) Finally, at step ST1505, the signature is added to the encrypted whole license, and the license generating process terminates.

By configured as discussed above, it is possible to accomplish correct license delivery with allowing modification of the license by the intermediate node within the range allowed by the issuer of the license and with controlling the size of the license which increases each time processed by the intermediate node.

According to the license delivery system of the second embodiment, the intermediate node adds the modification record to the received license as the modified history instead of the modified license and relays. Therefore, it is possible to suppress the size of the license to be delivered.

In the intermediate node of the second embodiment, the adding unit adds the modification record to the received license as the modified history instead of the modified license. Therefore, it is possible to suppress the size of the license to be delivered.

In the intermediate node of the second embodiment, the modification record verifying unit verifies the correctness of the modification record to be added to the received license. Therefore, it is possible to prevent human error at the license modification.

In the intermediate node of the second embodiment, the node-side license restoring unit restores the license to which the modified history is added, so that it is possible to easily obtain the license to which the modification is reflected.

In the terminal of the second embodiment, the terminal-side license verifying unit verifies the correctness of the received license based on the original allowed modification information and the modified history included in the received license, so that it is possible to easily detect fraud by the intermediate node.

In the terminal of the second embodiment, the terminal-side license restoring unit restores the license to which the modified history is added, so that it is possible to easily obtain the license to which the modification is reflected.

### Embodiment 3.

### (11. Addition of node allowed modification information by the intermediate node)

In the foregoing first and second embodiments, the allowed modification information (the original allowed modification information) is generated by the license issuer apparatus 2 as the original allowed modification information 102. In the third embodiment, a configuration will be explained, in which the allowed modification information is generated not only by the license issuer apparatus 2 but also by the intermediate node and included in the license. In the third embodiment, the allowed modification information generated by the intermediate node is called as node allowed modification information. In the third embodiment, the authority itself to add the node allowed modification information by the intermediate node is also included in the original allowed modification information 102 or the node allowed modification information which will be discussed later.

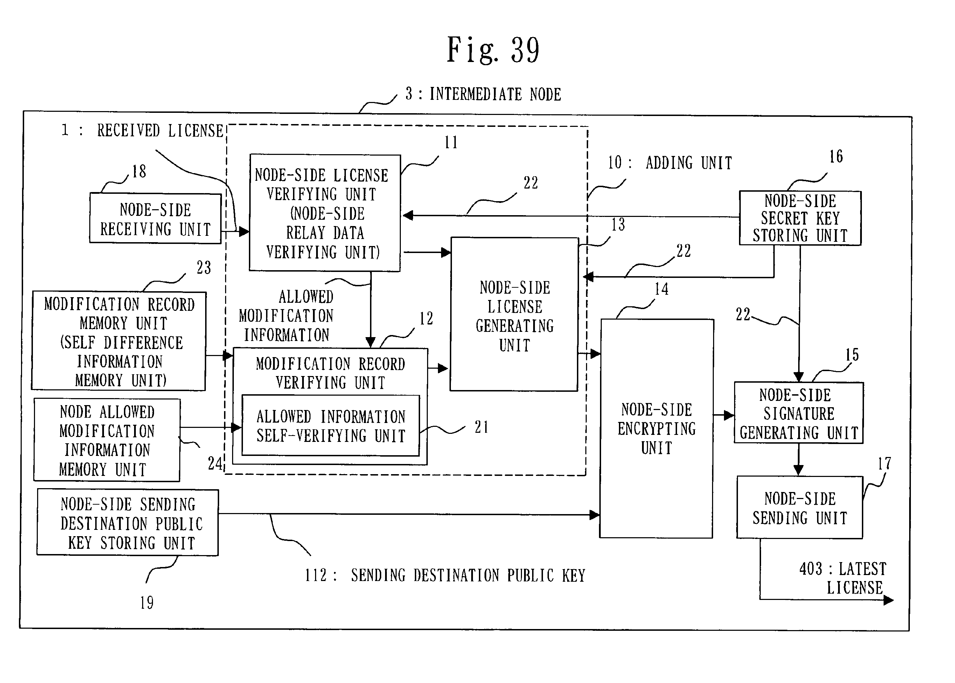

Fig. 39 is a configuration diagram of the intermediate node 3 of the third embodiment. Further, the system configuration of the third embodiment is the same as the one shown in Fig. 1. Further, the license issuer apparatus 2 and the terminal 4 are the same as the ones of the first embodiment.

Different from the intermediate node 3 of Fig. 13, the intermediate node 3 of Fig. 39 includes a node allowed modification information memory unit 24 and an allowed information self-verifying unit 21.
The node allowed modification information memory unit 24 stores node allowed modification information (self allowed modification information). The allowed information self-verifying unit 21 has a function to verify the node allowed modification information stored by the node allowed modification information memory unit 24.

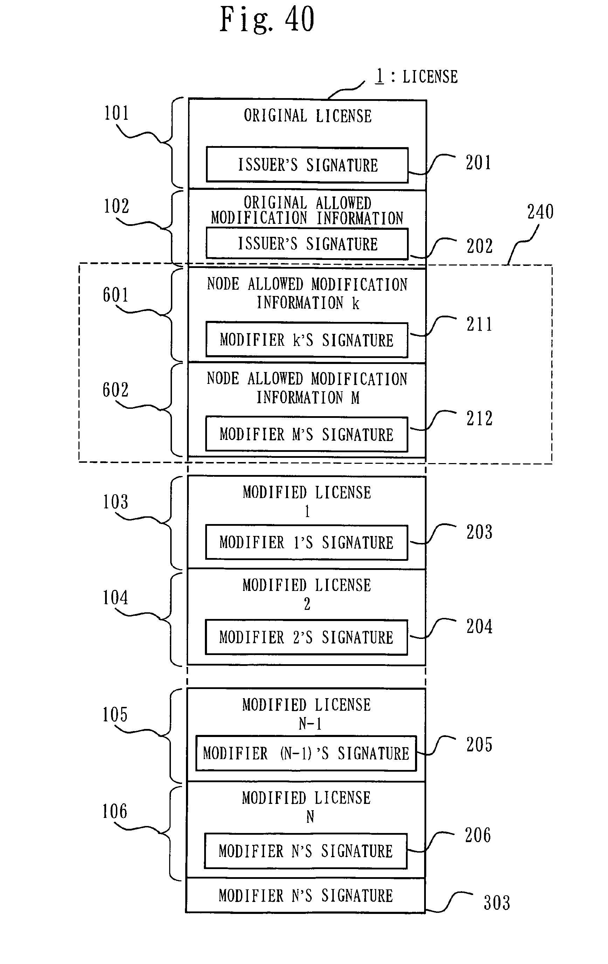

Fig. 40 is a block diagram showing a detailed data configuration of the license of the third embodiment in the configuration discussed in the first embodiment, in which each intermediate node appends the modified license. Fig. 40 corresponds to Fig. 19. To the license 1 of Fig. 40, an added part 240 is added to the license 1 of Fig. 19. In Fig. 40, node allowed modification information (K) 601 is node allowed modification information (other node allowed modification information) generated by the intermediate node K. As shown in Fig. 40, to the node allowed modification information (K) 601, a modifier K's signature 211 is added. In the same manner, node allowed modification information (M) 602 is node allowed modification information (other node allowed modification information) generated by the intermediate node M. To the node allowed modification information (M) 602, a modifier M's signature 212 is added. As shown in Fig. 40, the node allowed modification information is appended directly after the original allowed modification information 102.

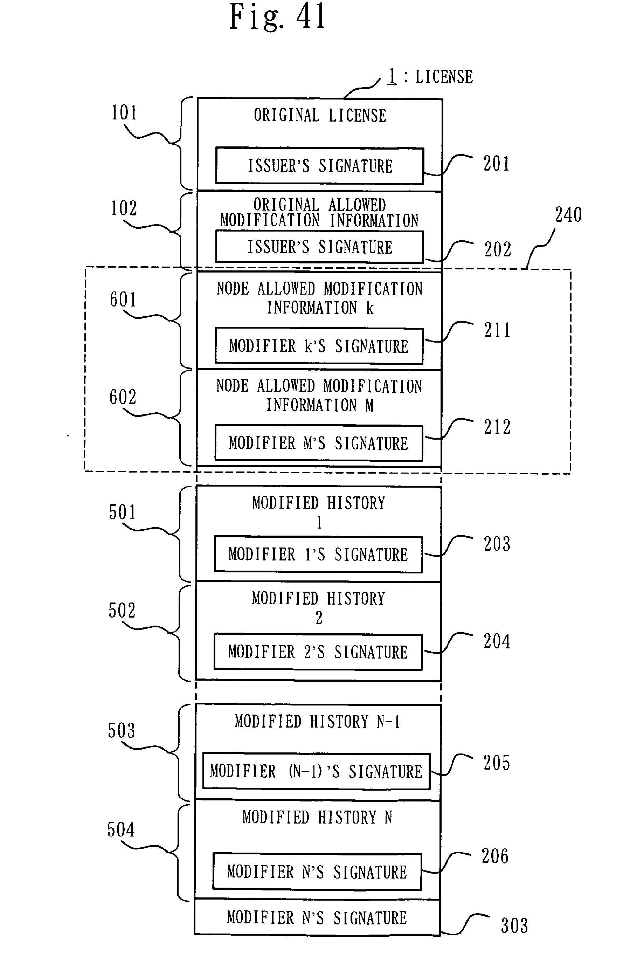

Fig. 41 is a block diagram showing a detailed data configuration of the license according to the third embodiment, in which each intermediate node appends the modified history as discussed in the second embodiment. Fig. 41 corresponds to Fig. 32. To the license 1 of Fig. 32, the license issuer apparatus 250 is added to the license 1 of Fig. 41. The node allowed modification information (K) 601, the modifier K's signature 211, the node allowed modification information (M) 602, and the modifier M's signature 212 are the same as the ones of Fig. 40, so that the explanation of them will be omitted.

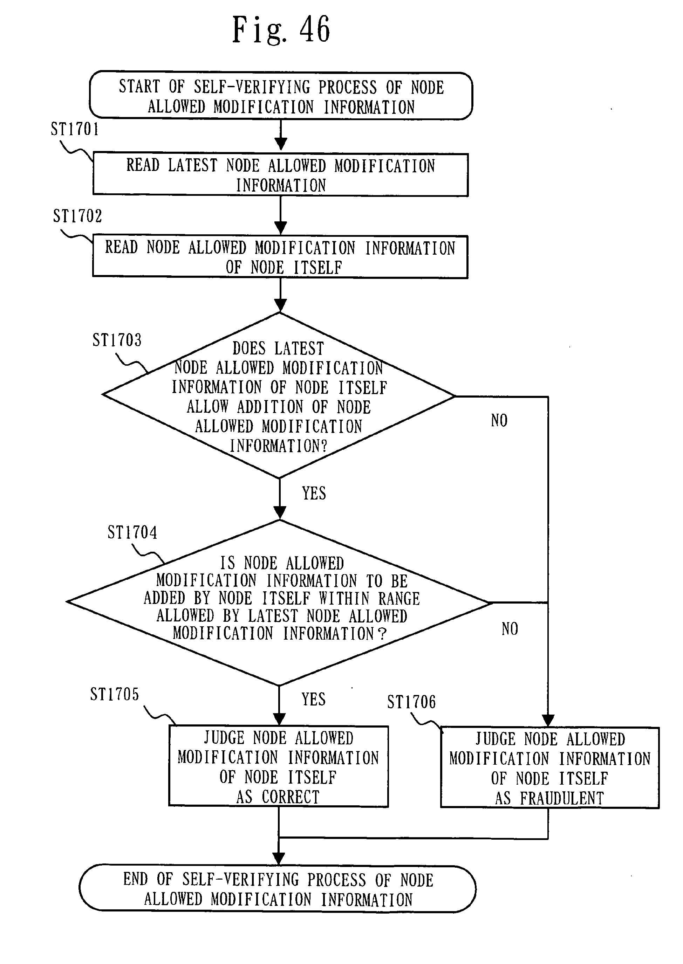

By referring to Figs. 39 and 40, appending of the node allowed modification information will be explained. It is assumed that the intermediate node is the intermediate node (M).
(1) The node-side receiving unit 18 of the intermediate node (M) receives the license 1 (not shown) including the original license 101 and the original allowed modification information 102 as a target for relaying.
(2) The node allowed modification information memory unit 24 stores the node allowed modification information (M). The allowed information self-verifying unit 21 of the adding unit 10 obtains the node allowed modification information (M) (the self allowed modification information) from the node allowed modification information memory unit 24.
(3) The allowed information self-verifying unit 21 inputs and verifies the node allowed modification information (M) obtained. This verification will be discussed later in the explanation of Fig. 46. The allowed information self-verifying unit 21 outputs the node allowed modification information (M) verified to the node-side license generating unit 13. The node-side license generating unit 13 generates a modifier M's signature 212 using the secret key 22 and adds the modifier M's signature 212 to the node allowed modification information (M). Further, the node-side license generating unit 13 inputs the received license after verification from the node-side license verifying unit 11 and appends the node allowed modification information (M) (the self allowed modification information) having the modifier M's signature 212 to the received license. The node-side license generating unit 13 outputs the license, to which the node allowed modification information (M) is appended, to the node-side encrypting unit 14. The subsequent operations are the same as the ones of the first and the second embodiments. Finally, the node-side sending unit 17 sends the license shown in Fig. 40 to the succeeding intermediate node 3 or the terminal 4 as the latest license 403.

This node allowed modification information (M) is stored by the node allowed modification information memory unit 24 as discussed above. The node allowed modification information memory unit 24 can be created by the manager of the intermediate node beforehand based on the contents of the contract between the issuer of the license and the manager of the intermediate node (provider) and stored by the node allowed modification information memory unit 24.

Or, the manager of the intermediate node confirms the contents of the original license and the original allowed modification information beforehand based on the contract. Then, when the intermediate node receives the received license, it also can be prescribed beforehand to generate predetermined node allowed modification information (M) based on the original license 101 and the original allowed modification information 102 included in the received license. The node allowed modification information (M) generated is stored by the node allowed modification information memory unit 24.

Further, it is also possible to configure so as to output the original license 101 and the original allowed modification information 102 included in the received license to a display apparatus or a printer and to generate the node allowed modification information by the manager of the intermediate node with viewing the output. The node allowed modification information (M) generated is stored by the node allowed modification information memory unit 24.

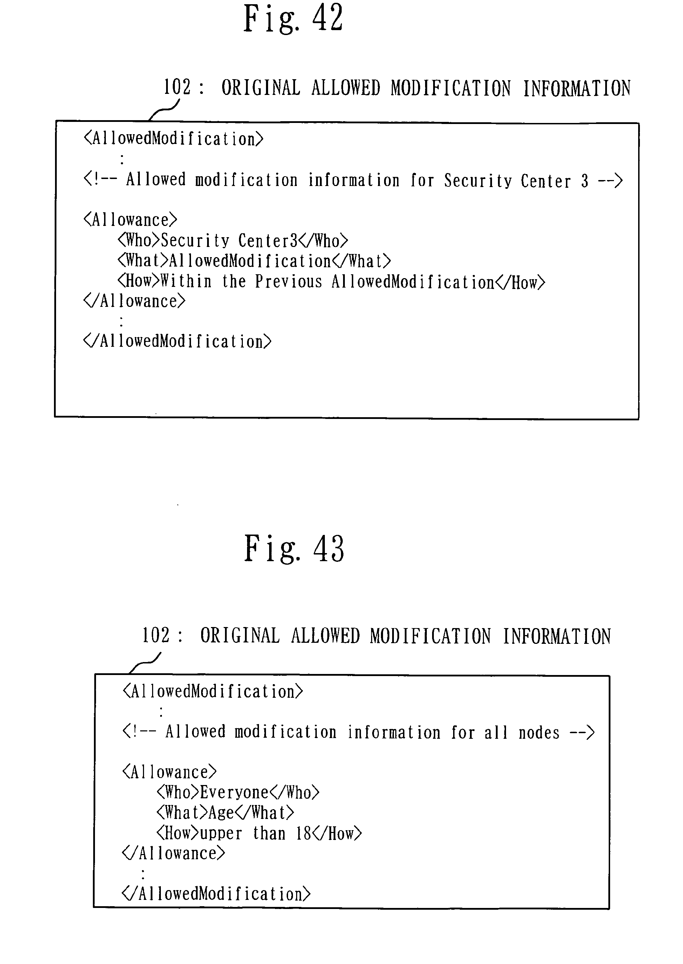

Fig. 42 is an example of the original allowed modification information 102 including an authority to add the node allowed modification information. As shown in Fig. 42, in the third embodiment, the authority itself to add the node allowed modification information by the intermediate node is also included in the original allowed modification information 102 or the node allowed modification information. The example of Fig. 42 shows that "Security Center 3" can newly add the node allowed modification information within the range of the previous node allowed modification information or the original allowed modification information.

Further, when the intermediate node modifies the license, it is assumed that each intermediate node modifies the license according to the latest node allowed modification information included in the received license.

Fig. 43 shows an example of the original allowed modification information 102 for all of the intermediate nodes 3 as a target. In this example, the visible-audible age is limited to at least 18 years old.

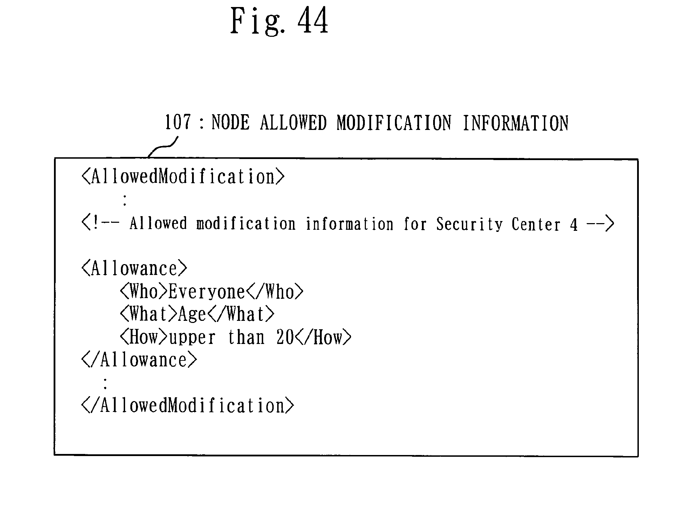

Next, Fig. 44 is the node allowed modification information to allow "Security Center 4" to modify the visible-audible age of the license to at least 20 years old. The node allowed modification information of Fig. 44 is an example in which "Security Center 3" allows "Security Center 4" to add the node allowed modification information having such contents, for example. Namely, the adding unit 10 of the intermediate node 3, which is "Security Center 3", generates the node allowed modification information 107 shown in Fig. 44.

### (12. Verification of a license by the intermediate node or the terminal)

The first and the second embodiments have been explained the procedure to verify the correctness of the license, which has been modified by the preceding intermediate nodes, by the intermediate node 3 or the terminal 4. In the third embodiment, in addition to the above, it also becomes necessary to verify the correctness of the node allowed modification information included in the license. The verification of the node allowed modification information is carried out at the intermediate node 3 or the terminal 4. Since the operation of the verification by the intermediate node 3 and the terminal 4 are the same, the case of the intermediate node will be explained, and the explanation for the terminal will be omitted.

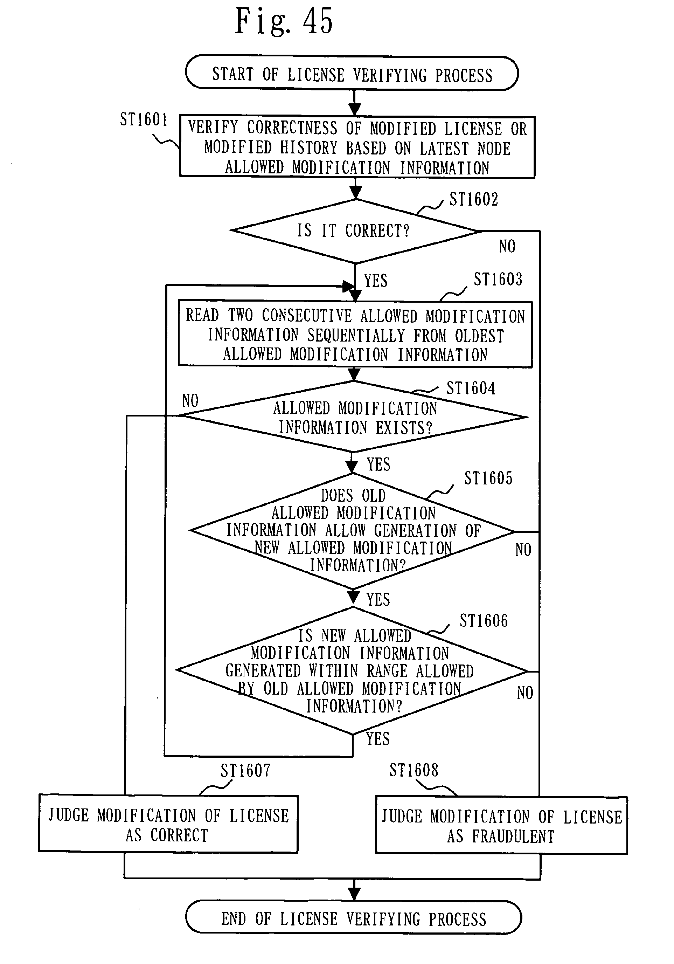

Fig. 45 is a flowchart of the license verifying process carried out by the node-side license verifying unit 11 of the intermediate node 3 shown in Fig. 39.
(1) At step ST1601, first it is discriminated if the modified license or the modified history is correct or not. Concretely, the correctness is discriminated according to the flowchart of Fig. 22 or Fig. 36.
(2) If it is discriminated as fraudulent at step ST1602, the modification of the license is judged as fraudulent at step ST1608, and the license verifying process terminates.

(3) If it is discriminated as correct, the operation next proceeds to the verification of the correctness of the node allowed modification information. At step ST1603, two pieces of the allowed modification information (the original allowed modification, the node allowed modification information) are read sequentially from the oldest. When there are two pieces of the allowed modification information, at step ST1605, it is discriminated if the old allowed modification information allows generation of node allowed modification information by the intermediate node which generates the new node allowed modification information or not. If it is discriminated that the old allowed modification information does not allow, the modification of the license is judged as fraudulent at step ST 1608, and the license verifying process terminates.

(4) If it is discriminated that the old allowed modification information allows, then at step ST1606, it is discriminated if the new node allowed modification information is generated within the range allowed by the old allowed modification information or not. If the node allowed modification information is generated exceeding the allowed range, the modification of the license is judged as fraudulent at step ST1608, and the license verifying process terminates.

(5) If it is discriminated that it is within the allowed range, the operation returns to step ST1603 again, the same process is repeated on the next two pieces of node allowed modification information. After this process is repeated until it is judged that there is no next node allowed modification information at step ST1604, the modification of the license including the node allowed modification information is judged as correct at step ST1607, and the license verifying process terminates.

### (13. Verification, by the intermediate node, of the correctness of addition of the node allowed modification information)

In this embodiment, it is also necessary to verify by the intermediate node itself the correctness of addition of node allowed modification information. An allowed information self-verifying unit 21 verifies the correctness of the node allowed modification information of the node itself.

Fig. 46 is a flowchart showing the operation of the allowed information self-verifying unit 21 of the intermediate node 3. The allowed information self-verifying unit 21 verifies the correctness of the node allowed modification information stored by the node allowed modification information memory unit 24. Namely, the intermediate node 3 itself verifies the node modification record generated by the node itself
(1) At step ST1701, the latest allowed modification information (either of the original allowed modification information and the node allowed modification information) included in the received license is read.
(2) Next, at step ST1702, the node allowed modification information of the node itself is read. At step T1703, using the latest allowed modification information, it is discriminated if the node itself is allowed to add the node allowed modification information to the license or not. If not allowed, at step ST1706, the node allowed modification information of the node itself is judged as fraudulent, the verifying process of the node allowed modification information terminates.

(3) If allowed, next at step ST1704, it is discriminated if the contents of the node allowed modification information to be added by the node itself is within the range allowed by the latest allowed modification information or not. If it exceeds the range, at step ST1706, the node allowed modification information of the node itself is judged as fraudulent, the self-verifying process of the node allowed modification information terminates.

(4) If it is within the allowed range, at step ST1705, the node allowed modification information is judged as correct, the verifying process of the node allowed modification information terminates.

By performing the above process by the modification record verifying unit possessed by the intermediate node in addition to the verification of the modification record, it is possible to verify the correctness of addition of the node allowed modification information by the node itself

By configured as discussed above, not only the issuer of the license but also the intermediate node can generate the allowed modification information and include in the license, so that it is possible to accomplish the license delivery, which allows the intermediate node to modify the license, more flexibly

In the intermediate node of the third embodiment, the adding unit adds the node allowed modification information to the received license including the original license and the original allowed modification information, and the node-side sending unit relays the received license to which the node allowed modification information is added. Therefore, it is possible to perform flexible and various license delivery.

In the intermediate node of the third embodiment, the allowed information self-verifying unit verifies the correctness of the node allowed modification information obtained by the adding unit. Therefore, it is possible to perform the correct license delivery.

In the intermediate node of the third embodiment, the node-side license verifying unit verifies the correctness of the received license. Therefore, it is possible to perform the correct license delivery.

### Embodiment 4.

### (14. Enforcement of correct license modifying process using a tamper-proof apparatus)

By the above discussed first through third embodiments, even if an intermediate node fraudulently modify a license, it is possible to detect the fraud when another intermediate node or a terminal receives the license which has been fraudulently modified. Therefore, fraud can be prevented in the license delivery system as a whole. However, there still remains possibility to commit fraud by the intermediate node.

The fourth embodiment will discuss, in order to improve the security of the system, a method to enforce the correct modification of the license having the configuration as has been explained on the intermediate node.

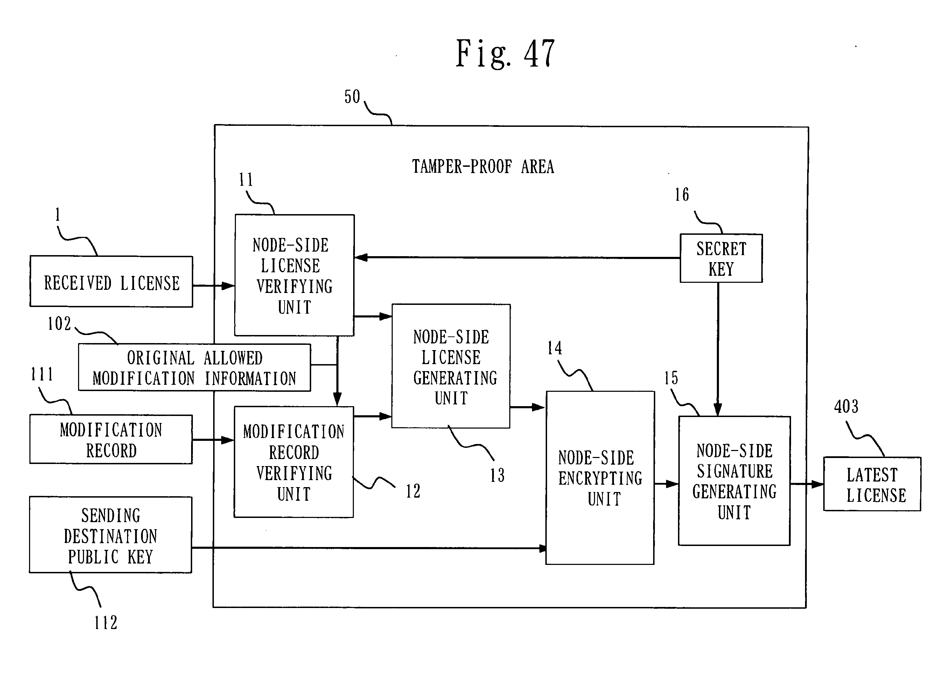

Fig. 47 is a block diagram of a license modification function of the intermediate node. Fig. 47 shows a configuration which inputs the received license 1, the modification record 111, and the sending destination public key 112, and outputs the latest license 403 through respective processing units stored by a tamper-proof unit 50. The tamper-proof unit 50 is an apparatus which is physically shielded and has a feature that if it is once opened, data and programs stored inside will evaporate and become unavailable.

The node-side license verifying unit 11, the modification record verifying unit 12, the node-side license generating unit 13, the node-side encrypting unit 14, the node-side signature generating unit 15, etc. have been explained in the explanation of Figs. 13, 31, and 39.

By configured as discussed above, a person who manages the intermediate node cannot perform fraudulent modification of the received license, which causes enforcement of the correct license modification.

### (15. Enforcement of correct license modifying process by simultaneous processing of a license and a contents key)

In the above, by referring to Fig. 47, the method to enforce the correct license modifying process using the tamper proof unit 50 has been explained. However, without using the apparatus as shown in Fig. 47, it is still possible to generate fraudulent license data.

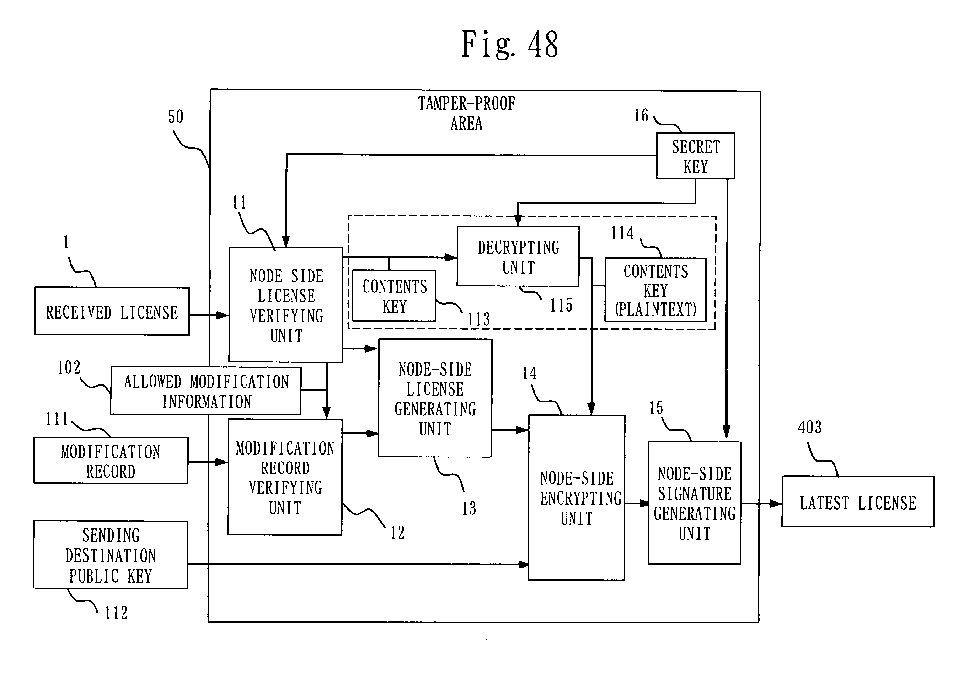

Fig. 48 shows a configuration to simultaneously process not only a license but also a contents key to be normally delivered with the license in the tamper proof unit 50 in order to solve the problem.

A contents key 113 discussed here is attached to the received license 1 and it is assumed that it is encrypted using a public key of the receiver. The contents key 113 is separated from the license by the node-side license verifying unit 11. Then, the contents key 113 is decrypted by the decrypting unit 115 using the secret key 16 and becomes a plaintext contents key 114. Further, the contents key 114 is encrypted again using the sending destination public key 112 by the node-side encrypting unit 14 and appended to the modified license.

By configured like this, the intermediate node cannot obtain the plaintext contents key itself even if the intermediate node falsifies the received license without depending on the tamper-proof apparatus 50. Therefore, the falsification itself of the license becomes meaningless. Accordingly, the configuration shown in Fig. 48 further enforces the use of the tamper-proof apparatus 50 on the intermediate node.

By configured as discussed above, it is possible to eliminate the possibility to generate the license fraudulently by the intermediate node, which further improves the security of the system.

### Industrial Applicability

As has been discussed, the license delivery system explained in the first through fourth embodiments is useful for a license delivery with multiple stages or multiple layers, which allows an intermediate node to modify a license within a range allowed by an issuer of the license.

In the foregoing embodiments, a license format and a license delivery system has been explained, in which the license defining a right to use contents and having a form, in which allowed modification information defining which intermediate node can modify which right to use in what range is added to the license and the license modified at the intermediate node is appended to the original license sequentially, is handled; a license verifying unit to verify if the received license has been modified correctly at the preceding node is provided in the intermediate node and a terminal; a modified history verifying unit to verify if modified history of the license which has been prepared by the node itself is within a range of allowed modification information allowed by a contents issuer is provided in the intermediate node; and a license generating unit to generate a new modified license from the received license and the modified history is provided in the intermediate node.

In the foregoing embodiments, a license format and a license delivery system has been explained, in which the license having a form, in which modified history at the intermediate node is appended to the original license sequentially, is handled; a license generating unit to generate a new license by appending modified history which has been prepared by the node itself is provided in the intermediate node; and a license restoring unit to restore the latest license by repeatedly reflecting the modified history included in the license to the original license of the license issuer is provided in the intermediate node.

In the foregoing embodiments, a license format and a license delivery system has been explained, in which the license having a form, in which the intermediate node is allowed to add allowed modification information and the allowed modification information generated by the intermediate node is appended directly after the previous allowed modification information, is handled; a license verifying unit to verify if the allowed modification information has been added correctly in addition to verifying if the received license has been modified correctly at the preceding node is provided in the intermediate node and a terminal; and a modified history verifying unit to verify the modified history of the license which has been prepared by the node itself is within the range of the latest allowed modification information is provided in the intermediate node.

In the foregoing embodiments, a license delivery system has been explained, in which a license verifying unit, a modified history verifying unit, a license generating unit, an encrypting unit, and a signature generating unit are stored in a tamper-proof apparatus, and the tamper-proof apparatus inputting the license received, modified history, and a sending destination public key and outputting an encrypted signed license is provided in the intermediate node.

In the foregoing embodiments, a license delivery system has been explained, in which not only modification of the license but also decryption of a contents key using a secret key of the apparatus itself and re-encryption using a public key of the sending destination are performed in the tamper-proof apparatus in the license delivery system described in claim 4.

As discussed above, the license delivery system according to the foregoing embodiments includes a license configuration in which a contents holder (the license issuer apparatus) adds allowed modification information (the original allowed modification information) to a license (the original license) and send to a contents provider (the intermediate node), and the contents provider (the intermediate node) modifies the license within the range of the allowed modification information (the original allowed modification information) and appends the modified license or the modified history to the received license and sends to the next contents provider (the intermediate node). Further, the contents provider (the intermediate node) and a terminal have a node-side license verifying unit and a terminal-side license verifying unit to verify if the received license has been modified correctly at the preceding node. Further, the contents provider (the intermediate node) has a modified history verifying unit (the allowed information self-verifying unit) to verify if the modified history (the modification report) which has been prepared by the provider itself is within the range of the allowed modification information (the original allowed modification information) allowed by the contents holder (the intermediate node) or not. Further, the contents provider (the intermediate node) has a node-side license generating unit to generate a new modified license from the received license and the modified history. Like this, according to the license delivery system related to the embodiments, by adding the allowed modification information (the original allowed modification information) and the modified license or the modified history by the contents provider (the intermediate node) to the license, the contents provider (the intermediate node) located succeeding in the license delivery or the terminal can verify if the license has been modified correctly or not. Therefore, the contents provider (the intermediate node) or the terminal can detect and prevent the fraudulent license modification by the contents provider (the intermediate node). Moreover, without limiting the data to special data such as a license, for general data, it brings an effect to accomplish secure data transmission with allowing the data modification within the range allowed by the data issuer.

### Brief Explanation of the Drawings

[Fig. 1] Fig. 1 shows a configuration of a license delivery system 1000 according to the first embodiment.
[Fig. 2] Fig. 2 shows an outline of operation of the license delivery system 1000 according to the first embodiment.
[Fig. 3] Fig. 3 shows an outer appearance of a license issuer apparatus 2 according to the first embodiment.
[Fig. 4] Fig. 4 shows a hardware configuration of the license issuer apparatus 2 according to the first embodiment.
[Fig. 5] Fig. 5 shows a hardware configuration of a terminal 4 according to the first embodiment.
[Fig. 6] Fig. 6 shows a block configuration of the license issuer apparatus 2 according to the first embodiment.
[Fig. 7] Fig. 7 is a block showing a detailed configuration of an initial state of a license generated by the license issuer apparatus 2 according to the first embodiment.
[Fig. 8] Fig. 8 shows a concrete example of an original license according to the first embodiment.
[Fig. 9] Fig. 9 shows a concrete example of original allowed modification information according to the first embodiment.
[Fig. 10]Fig. 10 shows a generating process of an issuer's signature 201 according to the first embodiment.
[Fig. 11] Fig. 11 shows a generating process of an issuer's signature 202 according to the first embodiment.
[Fig. 12] Fig. 12 shows an outline of generation of the license 1 by the license issuer apparatus 2 according to the first embodiment.
[Fig. 13] Fig. 13 shows a configuration of an intermediate node 3 according to the first embodiment.
[Fig. 14] Fig. 14 shows decryption of the original license and the original allowed modification information according to the first embodiment.
[Fig. 15] Fig. 15 shows a concrete example of modified license generated by the intermediate node 3 according to the first embodiment.
[Fig. 16] Fig. 16 is a block diagram showing a detailed configuration of the license modified by the intermediate node 3 according to the first embodiment.
[Fig. 17] Fig. 17 shows a generating process of a modifier's signature 203 according to the first embodiment.
[Fig. 18] Fig. 18 shows an outline of generation of the license 1 according to the first embodiment.
[Fig. 19] Fig. 19 is a block diagram showing a detailed configuration of the license after modified N times at an intermediate node according to the first embodiment.
[Fig. 20] Fig. 20 shows a configuration of a terminal apparatus 4 according to the first embodiment.
[Fig. 21] Fig. 21 is a block diagram of a node-side license verifying unit of the intermediate node 3 according to the first embodiment.
[Fig. 22] Fig. 22 is a flowchart of a license verifying process performed by the node-side license verifying unit according to the first embodiment.
[Fig. 23] Fig. 23 is an explanatory diagram of the license verifying process performed by the node-side license verifying unit according to the first embodiment.
[Fig. 24] Fig. 24 is an explanatory diagram of the license verifying process performed by the node-side license verifying unit according to the first embodiment.
[Fig. 25] Fig. 25 is a block diagram of a modification record verifying unit of the intermediate node according to the first embodiment.
[Fig. 26] Fig. 26 shows an actual example of modified history (a unique form) according to the first embodiment.
[Fig. 27] Fig. 27 is a flowchart of a modification record verifying process performed by the modification record verifying unit according to the first embodiment.
[Fig. 28] Fig. 28 shows an actual example of the modification record in XSL format according to the first embodiment.
[Fig. 29] Fig. 29 is a block diagram of a node-side license generating unit of the intermediate node according to the first embodiment.
[Fig. 30] Fig. 30 is a flowchart of a license generating process of the node-side license generating unit according to the first embodiment.
[Fig. 31] Fig. 31 shows a configuration of the intermediate node 3 according to the second embodiment.
[Fig. 32] Fig. 32 is a block diagram showing a detailed configuration of the license after modified N times at each intermediate node according to the second embodiment.
[Fig. 33] Fig. 33 is a block diagram of a node-side license restoring unit of the intermediate node according to the second embodiment.
[Fig. 34] Fig. 34 is a flowchart of a license restoring process of the node-side license restoring unit according to the second embodiment.
[Fig. 35] Fig. 35 is a block diagram of a node-side license verifying unit of the intermediate node according to the second embodiment.
[Fig. 36] Fig. 36 is a flowchart of a license verifying process of the node-side license verifying unit according to the second embodiment.
[Fig. 37] Fig. 37 is a block diagram of a node-side license generating unit of the intermediate node according to the second embodiment.
[Fig. 38] Fig. 38 is a flowchart of a license generating process of the node-side license generating unit according to the second embodiment.
[Fig. 39] Fig. 39 is a configuration of the intermediate node 3 according to the third embodiment.
[Fig. 40] Fig. 40 is a block diagram showing a detailed configuration of a license when a modified license is appended to the license according to the third embodiment.
[Fig. 41] Fig. 41 is a block diagram showing a detailed configuration of the license when a modified history is appended to the license according to the third embodiment.
[Fig. 42] Fig. 42 shows an actual example of original allowed modification information according to the third embodiment.
[Fig. 43] Fig. 43 shows an actual example of original allowed modification information according to the third embodiment.
[Fig. 44] Fig. 44 shows an actual example of node allowed modification information according to the third embodiment.
[Fig. 45] Fig. 45 a flowchart of a license verifying process of the node-side license verifying unit according to the third embodiment.
[Fig. 46] Fig. 46 is a flowchart of a verifying process of node allowed modification information of a modification record verifying unit according to the third embodiment.
[Fig. 47] Fig. 47 is a block diagram showing a configuration of a license modification function of the intermediate node 3 according to the fourth embodiment.
[Fig. 48] Fig. 48 is a block diagram showing a configuration of the license modification function of the intermediate node according to the fourth embodiment.

### Explanation of Signs

1, 1a, 1b, and 1c: licenses; 2: a license issuer apparatus; 3: an intermediate node; 4: a terminal; 5: a network; 10: an adding unit; 11: a node-side license verifying unit; 12: a modification record verifying unit; 13: a node-side license generating unit; 14: a node-side encrypting unit; 15: a node-side signature generating unit; 16: a node-side secret key storing unit; 17: a node-side sending unit; 18: a node-side receiving unit; 19: a node-side sending destination public key storing unit; 20: a node-side license restoring unit; 21: an allowed information self-verifying unit; 22: a secret key; 23: a modification record verifying unit; 24: a node allowed modification information memory unit; 30: a secret key; 31: an issuer-side license generating unit; 32: an original license generating unit; 33: an original allowed modification information generating unit; 34: an issuer-side sending destination public key storing unit; 35: an issuer-side encrypting unit; 36: an issuer-side secret key storing unit; 37: an issuer-side signature generating unit; 38: an issuer-side sending unit; 39: a sending destination public key; 41: a terminal-side receiving unit; 42: a terminal-side license restoring unit; 43: a terminal-side license verifying unit; 44: a terminal-side contents using unit; 45: a terminal-side secret key storing unit; 46: a secret key; 50: a tamper proof unit; 101: an original license; 102: original allowed modification information; 103: a modified license; 104: a modified license (2); 105: a modified license (N-1); 106: a modified license (N); 107: node allowed modification information; 111: modification record; 112: a sending destination public key; 113, 114: contents keys; 115: a decrypting unit; 201, 202: issuer's signatures; 203: a modifier's signature; 204: a modifier 2's signature; 205: a modifier (N-1)'s signature; 206: a modifier N's signature; 211: a modifier K's signature; 212: a modifier M signature; 240: an added part; 302: an issuer's signature; 302: a modifier's signature; 303: a modifier N's signature; 401, 402: correctness verified results; 403: a latest license; 501: a modified history (1); 502: a modified history (2); 503: a modified history (N); 504: a modified history (N-1); 601: node allowed modification information K; 602: node allowed modification information (M); 800: a computer system; 810: a CPU; 811: a ROM; 812: a RAM; 813: a liquid crystal display apparatus; 814: a keyboard; 815: a mouse; 816: a communication board; 817: an FDD; 818: a CDD; 819: a printer; 820: a magnetic disk drive; 821: an OS; 822: a window system; 823: a group of programs; 824: a group of files; 825: a bus; 830: a system unit; 851: a remote control receiving unit; 852: a remote control device; 900: a network; and 1000: a license delivery system.

## Claims

1. A data delivery system having an issuance apparatus to issue data, a plurality of intermediate nodes to relay the data issued by the issuance apparatus, and a terminal apparatus to receive the data through the plurality of intermediate nodes,
wherein the issuance apparatus issues relay data including original data to be delivered to the terminal apparatus and original allowed modification information allowing to change the original data and showing contents which is allowed to change as well,
wherein at least one of the plurality of intermediate nodes, on relaying the relay data issued by the issuance apparatus, generates modified data which is made by changing at least a part of the original data based on the original allowed modification information included in the relay data, adds the modified data generated to the relay data, and relays the relay data, and
wherein the terminal apparatus receives the relay data to which the modified data is added by the at least one of the plurality of intermediate nodes.

2. The data delivery system of claim 1, wherein the original data included in the relay data issued by the issuance apparatus includes an original license which allows the terminal apparatus a predetermined right.

3. An issuance apparatus issuing predetermined data and delivering the predetermined data issued to a terminal apparatus through a plurality of intermediate nodes, the issuance apparatus comprising:
an issuing unit issuing relay data including original data to be delivered to the terminal apparatus and original allowed modification information allowing at least one of the plurality of intermediate nodes to change the original data and showing contents which is allowed to change as well; and
an issuer-side sending unit sending the relay data issued by the issuing unit.

4. An intermediate node relaying data to a terminal apparatus comprising:
a node-side receiving unit receiving relay data, including original data to be delivered to the terminal apparatus and original allowed modification information allowing to change the original data and showing contents which is allowed to change as well, as a target for relaying;
an adding unit generating modified data which is made by changing at least a part of the original data based on the original allowed modification information included in the relay data received by the node-side receiving unit, and adding the modified data generated to the relay data received by the node-side receiving unit; and
a node-side sending unit sending the relay data to which the modified data is added by the adding unit as new relay data for relaying.

5. The intermediate node of claim 4,
wherein the adding unit obtains a difference showing a change from the original data as self difference information and generates the modified data based on the self difference information obtained and the original allowed modification information included in the relay data received by the node-side receiving unit.

6. The intermediate node of claim 5,
wherein the adding unit comprises a difference verifying unit verifying if the self difference information is within a range allowed by the original allowed modification information or not.

7. The intermediate node of claim 4,
wherein the node-side receiving unit receives relay data, including original data to be delivered to the terminal apparatus, original allowed modification information allowing to change the original data and showing contents which is allowed to change as well, and other node changed data which is made by changing the original data and added by another intermediate node, as a target for relaying, and
wherein the adding unit comprises a node-side relay data verifying unit verifying if the relay data received by the node-side receiving unit is correct or not based on the original data, the original allowed modification information, and the other node changed data included in the relay data received by the node-side receiving unit.

8. A terminal apparatus receiving delivery of data relayed through a plurality of intermediate nodes, the terminal apparatus comprising:
a terminal-side receiving unit receiving relay data relayed through the plurality of intermediate nodes and including original data to be delivered, original allowed modification information allowing at least one of the plurality of intermediate nodes to change the original data and showing contents which is allowed to change as well, and other node changed data which is made by changing the original data and added by at least one of the plurality of intermediate nodes; and
a terminal-side relay data verifying unit verifying if the relay data received by the terminal-side receiving unit is correct or not based on the original data, the original allowed modification information, and the other node changed data included in the relay data received by the terminal-side receiving unit.

9. A data delivery system having an issuance apparatus to issue data, a plurality of intermediate nodes to relay the data issued by the issuance apparatus, and a terminal apparatus to receive the data through the plurality of intermediate nodes,
wherein the issuance apparatus issues relay data including original data to be delivered to the terminal apparatus,
wherein at least one of the plurality of intermediate nodes, on relaying the relay data issued by the issuance apparatus, obtains a difference showing a change from the original data as self difference information, adds the self difference information obtained to the relay data, and relays the relay data, and
wherein the terminal apparatus receives the relay data to which the self difference information is added by at least the one of the plurality of intermediate nodes.

10. An intermediate node relaying data to a terminal apparatus comprising:
a node-side receiving unit receiving relay data including original data to be delivered to the terminal apparatus as a target for relaying;
an adding unit obtaining a difference from the original data as self difference information and adding the self difference information to the relay data received by the node-side receiving unit; and
a node-side sending unit sending the relay data, to which the self difference information is added by the adding unit, as new relay data for relaying.

11. The intermediate node of claim 10,
wherein the node-side receiving unit receives relay data, including original data to be delivered to the terminal apparatus and original allowed modification information allowing to change the original data and showing contents which is allowed to change as well, as a target for relaying, and
wherein the adding unit comprises a difference verifying unit verifying if the self difference information is within a range allowed by the original allowed modification information included in the relay data received by the node-side receiving unit or not.

12. The intermediate node of claim 10,
wherein the node-side receiving unit receives relay data, including original data to be delivered to the terminal apparatus, original allowed modification information allowing to change the original data and showing contents which is allowed to change as well, and other node difference information to which a change from the original data is added by another intermediate node as a difference, as a target for relaying, and
wherein the adding unit comprises a node-side relay data verifying unit verifying if the relay data received by the node-side receiving unit is correct or not based on the original allowed modification information and the other node difference information included in the relay data received by the node-side receiving unit.

13. The intermediate node of claim 10,
wherein the node-side receiving unit receives relay data, including original data to be delivered to the terminal apparatus and other node difference information to which a change from the original data is added by another intermediate node as a difference, as a target for relaying, and
wherein the adding unit comprises a node-side reflected data generating unit generating reflected data to which the difference from the original data shown by the other node difference information is reflected to the original data based on the original data and the other node difference information included in the relay data received by the node-side receiving unit.

14. A terminal apparatus receiving delivery of data relayed through a plurality of intermediate nodes, the terminal apparatus comprising:
a terminal-side receiving unit receiving relay data relayed through the plurality of intermediate nodes and including original data to be delivered, original allowed modification information allowing at least one of the plurality of intermediate nodes to change the original data and showing contents which is allowed to change as well, and other node difference information to which a change from the original data is added by at least one of the plurality of intermediate nodes as a difference; and
a terminal-side relay data verifying unit verifying if the relay data received by the terminal-side receiving unit is correct or not based on the original allowed modification information and the other node difference information included in the relay data received by the terminal-side receiving unit.

15. The terminal apparatus of claim 14 further comprising:
a terminal-side reflected data generating unit generating reflected data to which the difference from the original data shown by the other node difference information is reflected to the original data based on the original data and the other node difference information included in the relay data received by the terminal-side receiving unit.

16. An intermediate node relaying data to a terminal apparatus, the intermediate node comprising:
a node-side receiving unit receiving relay data including original data to be delivered to the terminal apparatus as a target for relaying;
an adding unit obtaining information allowing to change the original data included in the relay data received by the node-side receiving unit and showing contents which is allowed to change as self allowed modification information, and adding the self allowed modification information obtained to the relay data received by the node-side receiving unit; and
a node-side sending unit sending the relay data to which the self allowed modification information is added by the adding unit as new relay data for relaying.

17. The intermediate node of claim 16,
wherein the node-side receiving unit receives relay data including original data to be delivered to the terminal apparatus and other node allowed modification information which is information added by another intermediate node and which allows to change the original data and shows contents which is allowed to change as well, and
wherein the adding unit comprises an allowed information self-verifying unit verifying if the self allowed modification information is correct or not based on the other node allowed modification information included in the relay data received by the node-side receiving unit.

18. The intermediate node of claim 16,
wherein the node-side receiving unit receives relay data including original data and original allowed information issued by an issuance apparatus which issues the original data to be delivered to the terminal apparatus and the original allowed modification information allowing to change the original data and showing contents which is allowed to change as well, and other node allowed modification information which is information added by another intermediate node and which allows to change the original data and shows contents which is allowed to change as well, and
wherein the adding unit comprises a node-side relay data verifying unit verifying if the relay data received by the node-side receiving unit is correct or not based on the original allowed modification information and the other node allowed modification information included in the relay data received by the node-side receiving unit.
